(19) Europäisches Patentamt
European Patent Office
Office européen des brevets

(11) **EP 4 757 469 A1**

(12) **EUROPEAN PATENT APPLICATION**
published in accordance with Art. 153(4) EPC

(43) Date of publication:
**10.06.2026 Bulletin 2026/24**

(21) Application number: **24858328.8**

(22) Date of filing: **15.08.2024**

(51) International Patent Classification (IPC):
**H04W 72/23** (2023.01)

(52) Cooperative Patent Classification (CPC):
**H04L 5/00; H04W 72/23**

(86) International application number:
**PCT/CN2024/112436**

(87) International publication number:
**WO 2025/044785 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 CN 202311127552**

(71) Applicant: HUAWEI TECHNOLOGIES CO., LTD.
**Shenzhen, Guangdong 518129 (CN)**

(72) Inventors:
• YU, Xianglong
  **Shenzhen, Guangdong 518129 (CN)**
• WANG, Hanqing
  **Shenzhen, Guangdong 518129 (CN)**
• WANG, Xiaohan
  **Shenzhen, Guangdong 518129 (CN)**
• JIN, Huangping
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RESOURCE INDICATION METHOD FOR COHERENT JOINT TRANSMISSION, AND COMMUNICATION APPARATUS**

(57) This application provides a resource indication method for coordinated transmission and a communication apparatus. The method includes: A terminal device receives first information from a first network device, where the first information indicates a first physical downlink shared channel PDSCH rate matching and a first time offset. The terminal device sends second information to a second network device based on the first information, where the second information indicates a second PDSCH rate matching and a second time offset, the second PDSCH rate matching is determined based on the first PDSCH rate matching, and the second time offset is determined based on the first time offset. According to the method provided in this application, the first network device and the second network device can send a PDSCH to the terminal device on a same time-frequency resource. In a multi-station coordination scenario, a plurality of network devices can send a PDSCH to a same terminal device on a same time-frequency resource, so that data transmission performance is improved.

FIG. 4

**Description**

This application claims priority to Chinese Patent Application No. 202311127552.4, filed with the China National Intellectual Property Administration on August 31, 2023 and entitled "RESOURCE INDICATION METHOD FOR COORDINATED TRANSMISSION AND COMMUNICATION APPARATUS", which is incorporated herein by reference in its entirety.

**TECHNICAL FIELD**

This application relates to the field of communication technologies, and in particular, to a resource indication method for coordinated transmission and a communication apparatus.

**BACKGROUND**

In a wireless communication system, a plurality of network devices (for example, base stations) are usually configured to perform networking to provide wide-area coverage, and one network device controls one or more cells to provide wireless coverage. To ensure seamless wide-area coverage, cell edges of a plurality of cells controlled by different base stations overlap. When a terminal device moves to an edge of a coverage area of one cell, signal power of the terminal device decreases accordingly, and a radio signal of another cell causes strong interference to the terminal device. Consequently, data transmission performance of the terminal device is degraded. To improve the data transmission performance of the terminal device located at the edge of the coverage area, a coherent joint transmission (coherent joint transmission, CJT) mechanism is introduced in the wireless communication system.

In the CJT mechanism, a plurality of network devices may perform downlink data transmission to the terminal device in a coherent joint transmission manner. The "coherent joint transmission" means that a plurality of network devices send same downlink data to a same terminal device. This requires scheduling information of a physical downlink shared channels (physical downlink shared channel, PDSCH) of the plurality of network devices to be consistent, so that radio resources used by the plurality of network devices to perform CJT are aligned. The scheduling information of the PDSCH indicates a radio resource used for downlink data transmission. When the PDSCH of the plurality of network devices arrives at the terminal device, coherent superposition is performed on the PDSCH, and interference of the PDSCH is coherently canceled. In this way, a signal to interference plus noise ratio (signal to interference plus noise ratio, SINR) is increased, and data transmission performance is improved.

However, in a non-ideal (non-ideal) backhaul (backhaul, BH) link scenario, a plurality of network devices cannot exchange real-time information, and when the plurality of network devices perform coherent joint transmission, it is difficult for the plurality of network devices to perform wireless transmission by using a same time-frequency resource.

**SUMMARY**

This application provides a resource indication method for coordinated transmission and a communication apparatus, to ensure radio resource alignment when a plurality of network devices perform coherent joint transmission in a non-ideal BH scenario, and improve data transmission performance.

According to a first aspect, a resource indication method for coordinated transmission is provided. The method may be performed by a terminal device or a component (for example, a chip or a chip system) of the terminal device. This is not limited in this application.

The method includes: The terminal device receives first information, where the first information is from a first network device, and the first information indicates a first physical downlink shared channel PDSCH rate matching and a first time offset. The terminal device sends second information to a second network device based on the first information, where the second information indicates a second PDSCH rate matching and a second time offset, the second PDSCH rate matching is determined based on the first PDSCH rate matching, the second time offset is determined based on the first time offset, the first time offset is an offset between a time unit in which the first information is received and a time unit in which the first PDSCH rate matching is located, and the second time offset is an offset between a time unit in which the second information is sent and a time unit in which the second PDSCH rate matching is located.

It should be understood that a PDSCH rate matching is used to determine a time-frequency resource actually used for PDSCH transmission. The PDSCH rate matching may also be referred to as a PDSCH dynamic rate matching, a PDSCH dynamic rate matching resource, a PDSCH rate matching resource, or the like. This is not limited in this application.

It should be further understood that the second information is determined based on the first information. To be specific, the second PDSCH rate matching is determined based on the first PDSCH rate matching, and the second time offset is determined based on the first time offset. The second PDSCH rate matching may be the same as the first PDSCH rate matching, or the second PDSCH rate matching may be different from the first PDSCH rate matching.

It should be further understood that the first time offset is an offset between a time unit in which the first information is received and a time unit in which the first PDSCH rate matching is located, where the time unit in which the first information is received may indicate a time unit in which the terminal device receives the first information. Alternatively, the first time offset is an offset between a time unit in which the first information is sent and a time unit in which the first PDSCH rate matching is located, where the time unit in which the first information is sent may indicate a time unit in which the first network device sends the first information. The second time offset is an offset between a time unit in which the second information is sent and a time unit in which the second PDSCH rate matching is located, where the time unit in which the second information is sent may indicate a time unit in which the terminal device sends the second information. Alternatively, the second time offset is an offset between a time unit in which the second information is received and a time unit in which the second PDSCH rate matching is located, where the time unit in which the second information is received may indicate a time unit in which a network device (for example, the first network device or the second network device) participating in coordinated transmission to the terminal device receives the second information.

According to the method provided in this application, the terminal device receives the first information from the first network device, and determines the second PDSCH rate matching and the second time offset based on the first PDSCH rate matching and the first time offset that are indicated by the first information. The terminal device indicates the second PDSCH rate matching and the second time offset by using the second information, and sends the second information to the second network device. Further, the second network device sends a PDSCH to the terminal device based on the second PDSCH rate matching and the second time offset. The first network device performs initial scheduling (or referred to as pre-scheduling) to determine the first information, and the second network device may not perform initial scheduling. The second network device sends the PDSCH to the terminal device based on the received second information determined by the terminal device based on the first information, so that the first network device and the second network device can send the PDSCH to the terminal device on a same transmission resource. In a scenario in which a plurality of network devices perform coordinated transmission to a same terminal device, it can be ensured that the plurality of network devices transmit data to the same terminal device by using a same time-frequency resource, so that data transmission performance is improved.

With reference to the first aspect, in some possible implementations, the terminal device receives at least one piece of third information, where the at least one piece of third information is from at least one second network device, one piece of third information in the at least one piece of third information indicates one third PDSCH rate matching in at least one third PDSCH rate matching and one third time offset in at least one third time offset, the one piece of third information, the one third PDSCH rate matching, and the one third time offset are in one-to-one correspondence, and the third time offset is an offset between a time unit in which the third information is received and a time unit in which the third PDSCH rate matching is located.

It should be understood that, before the terminal device determines the second information, the terminal device may further receive the at least one piece of third information from the at least one second network device. In other words, the terminal device may receive one or more pieces of third information sent by one or more second network devices. The at least one piece of third information indicates the at least one third PDSCH rate matching and the at least one third time offset. The terminal device determines the second information based on the at least one piece of third information and the first information. To be specific, the second PDSCH rate matching is determined based on the first PDSCH rate matching and the at least one third PDSCH rate matching, and the second time offset is determined based on the first time offset and the at least one third time offset.

Based on the foregoing technical solution, the first network device performs initial scheduling to determine the first information, the at least one second network device performs initial scheduling to determine the at least one piece of third information, and the terminal device determines the second information based on the first information and the at least one piece of third information, and sends the second information to the first network device and the at least one second network device. The first network device and the at least one second network device send the PDSCH to the terminal device based on the second information, so that the first network device and the at least one second network device can send the PDSCH to the terminal device on the same transmission resource. In a scenario in which a plurality of network devices perform coordinated transmission to a same terminal device, it can be ensured that the plurality of network devices transmit data to the same terminal device by using a same time-frequency resource, so that data transmission performance is improved.

With reference to the first aspect, in some possible implementations, the terminal device sends the second information to the at least one second network device and the first network device based on the first information and the at least one piece of third information, where the second information is determined based on the first information and the at least one piece of third information, the second PDSCH rate matching is determined based on the first PDSCH rate matching and the at least one third PDSCH rate matching, and the second time offset is determined based on the first time offset and the at least one third time offset.

Based on the foregoing technical solution, the terminal device receives the first information from the first network device and the at least one piece of third information from the at least one second network device, and the terminal device determines the second information based on the first information and the at least one piece of third information, and sends the second information to the first network device and the at least one second network device. The first network device and the at least one second network device send the PDSCH to the terminal device based on the second PDSCH rate matching and the second time offset that are indicated by the second information, so that the first network device and the at least one second network device send the PDSCH to the terminal device based on a same PDSCH rate matching and a same time unit. This ensures that the first network device and the at least one second network device transmit downlink data to the terminal device on a same resource. In this way, in a coherent joint transmission process, interference is reduced, a signal-to-noise ratio is increased, and the data transmission performance is improved.

With reference to the first aspect, in some possible implementations, the first information includes a first index, and the first index indicates a correspondence between the first PDSCH rate matching and the first time offset.

Based on the foregoing technical solution, a rule/correspondence between the first PDSCH rate matching and the first time offset is predefined or preconfigured for the terminal device, for example, a table between the first PDSCH rate matching and the first time offset. To be specific, the first network device may directly indicate an index (for example, the first index) or a sequence number of the table in the first information. The terminal device may directly determine, based on the first index and the predefined table, the first PDSCH rate matching and the first time offset that are indicated by the first index, so that resource overheads can be reduced.

With reference to the first aspect, in some possible implementations, the first information includes a first field, and the first field indicates the first PDSCH rate matching and the first time offset.

Based on the foregoing technical solution, the first PDSCH rate matching and the first time offset may be directly indicated by the first field in the first information. After obtaining the first information, the terminal device may directly determine the first PDSCH rate matching and the first time offset based on the first field in the first information. The first network device may reuse existing downlink information, and indicate the first PDSCH rate matching and the first time offset by adding the first field. The first PDSCH rate matching and the first time offset do not need to be indicated by adding signaling. This reduces signaling overheads and implements good compatibility with existing signaling.

With reference to the first aspect, in some possible implementations, the second information includes a second index, and the second index indicates a correspondence between the second PDSCH rate matching and the second time offset.

Based on the foregoing technical solution, a rule (for example, a table) about the second PDSCH rate matching and the second time offset is predefined or preconfigured for the terminal device, the first network device, and the second network device. To be specific, the terminal device may directly indicate an index (for example, the second index) or a sequence number of the table in the second information. The first network device and the second network device may directly determine, based on the second index and the predefined table, the second PDSCH rate matching and the second time offset that are indicated by the second index, so that the resource overheads can be reduced.

With reference to the first aspect, in some possible implementations, the second information includes a second field, and the second field indicates the second PDSCH rate matching and the second time offset.

Based on the foregoing technical solution, the second PDSCH rate matching and the second time offset may be directly indicated by the second field in the second information. After obtaining the second information, the first network device and the second network device may directly determine the second PDSCH rate matching and the second time offset based on the second field in the second information. The terminal device may reuse existing uplink information, and indicate the second PDSCH rate matching and the second time offset by adding the second field. The second PDSCH rate matching and the second time offset do not need to be indicated by adding signaling. This reduces the signaling overheads and implements the good compatibility with the existing signaling.

With reference to the first aspect, in some possible implementations, the third information includes a third index, and the third index indicates a correspondence between the third PDSCH rate matching and the third time offset.

Based on the foregoing technical solution, a rule (for example, a table) about the third PDSCH rate matching and the third time offset is predefined or preconfigured for the terminal device and the second network device. To be specific, the second network device may directly indicate an index (for example, the third index) or a sequence number of the table in the third information. The terminal device may directly determine, based on the third index and the predefined table, the third PDSCH rate matching and the third time offset that are indicated by the third index, so that the resource overheads can be reduced.

With reference to the first aspect, in some possible implementations, the third information includes a third field, and the third field indicates the third PDSCH rate matching and the third time offset.

Based on the foregoing technical solution, the third PDSCH rate matching and the third time offset may be directly indicated by the third field in the third information. After obtaining the third information, the terminal device may directly determine the third PDSCH rate matching and the third time offset based on the third field in the third information. The second network device may reuse the existing downlink information, and indicate the third PDSCH rate matching and the third time offset by adding the third field. The third PDSCH rate matching and the third time offset do not need to be indicated by adding signaling. This reduces the signaling overheads and implements the good compatibility with the existing signaling.

With reference to the first aspect, in some possible implementations, the second time offset includes at least one time offset.

It should be understood that the time offset in this application may be a slot offset, a mini-slot (mini-slot) offset, a subframe (subframe) offset, or a transmission time interval offset.

It should be understood that the second time offset includes at least one time offset, and the at least one time offset is determined based on the first time offset, or the at least one time offset is determined based on the first time offset and the third time offset. To be specific, after receiving the at least one time offset, the first network device and the second network device send the PDSCH to the terminal device on a transmission resource determined based on each of the at least one time offset.

With reference to the first aspect, in some possible implementations, when the first information is included in first downlink control information DCI, the first DCI is from the first network device, the first DCI includes a first PDSCH rate matching indication field and a fourth field, the first PDSCH rate matching indication field indicates the first PDSCH rate matching, and the fourth field indicates the first time offset.

It should be understood that, when the first network device sends the first DCI to the terminal device, the first DCI includes the first information, the first DCI may reuse an existing PDSCH rate matching indication field (for example, the first PDSCH rate matching indication field) to indicate the first PDSCH rate matching, and the first DCI adds a field (for example, the fourth field), to indicate the first time offset by using the fourth field.

With reference to the first aspect, in some possible implementations, when the third information is included in second downlink control information DCI, the second DCI is from the second network device, the second DCI includes a second PDSCH rate matching indication field and a fifth field, the second PDSCH rate matching indication field indicates the third PDSCH rate matching, and the fifth field indicates the third time offset.

It should be understood that, when the second network device sends the second DCI to the terminal device, the second DCI includes the third information, the second DCI may reuse an existing PDSCH rate matching indication field (for example, the second PDSCH rate matching indication field) to indicate the third PDSCH rate matching, and the second DCI adds a field (for example, the fifth field), to indicate the third time offset by using the fifth field.

Based on the foregoing technical solution, when the second network device performs transmission of the third information by using DCI information, the second network device may reuse a PDSCH rate matching indication field in the DCI information to indicate the third PDSCH rate matching, and add a field to DCI to indicate the third time offset. In this way, when compatibility with the existing DCI is good, the third PDSCH rate matching and the third time offset of the second network device are provided for the terminal device by using the DCI information, to reduce the signaling overheads.

According to a second aspect, a resource indication method for coordinated transmission is provided. The method may be performed by a network device or a component (for example, a chip or a chip system) of the network device. This is not limited in this application.

The method includes: A second network device receives second information sent by a terminal device, where the second information is determined based on first information, the first information is from a first network device, the first information indicates a first physical downlink shared channel PDSCH rate matching and a first time offset, the second information indicates a second PDSCH rate matching and a second time offset, the second PDSCH rate matching is determined based on the first PDSCH rate matching, and the second time offset is determined based on the first time offset. The second network device sends a PDSCH to the terminal device based on the second information, where the first time offset is an offset between a time unit in which the first information is located and a time unit in which the first PDSCH rate matching is located, and the second time offset is an offset between a time unit in which the second information is located and a time unit in which the second PDSCH rate matching is located.

According to the method provided in this application, the second network device receives the second information sent by the terminal device, where the second information is determined by the terminal device based on the first information received from the first network device. The second network device sends the PDSCH to the terminal device based on the second PDSCH rate matching and the second time offset that are indicated by the second information. The second network device sends the PDSCH to the terminal device based on the received second information determined by the terminal device based on the first information, so that the first network device and the second network device can send the PDSCH to the terminal device on a same transmission resource. In a scenario in which a plurality of network devices perform coordinated transmission to a same terminal device, it can be ensured that the plurality of network devices transmit data to the same terminal device by using a same time-frequency resource, so that data transmission performance is improved.

With reference to the second aspect, in some possible implementations, before the second network device receives the second information sent by the terminal device, the method further includes: The second network device sends third information to the terminal device, where the third information indicates a third PDSCH rate matching and a third time offset, and the third time offset is an offset between a time unit in which the third information is sent and a time unit in which the third PDSCH rate matching is located.

Based on the foregoing technical solution, the second network device sends the third information to the terminal device, and the terminal device determines the second information based on the first information from the first network device and the third information from the second network device, and sends the second information to the first network device and the second network device. The first network device and the second network device send the PDSCH to the terminal device based on the second PDSCH rate matching and the second time offset that are indicated by the second information, so that the first network device and the second network device send the PDSCH to the terminal device based on a same PDSCH rate matching and a same time unit. This ensures that the first network device and the second network device transmit downlink data to the terminal device on a same resource. In this way, in a coherent joint transmission process, interference is reduced, a signal-to-noise ratio is increased, and the data transmission performance is improved.

With reference to the second aspect, in some possible implementations, the second information is determined based on the first information and at least one piece of third information, the at least one piece of third information is from at least one second network device, and the at least one piece of third information indicates at least one third PDSCH rate matching and at least one third time offset. That the second PDSCH rate matching is determined based on the first PDSCH rate matching, and the second time offset is determined based on the first time offset includes: The second PDSCH rate matching is determined based on the first PDSCH rate matching and the at least one third PDSCH rate matching, and the second time offset is determined based on the first time offset and the at least one third time offset.

With reference to the second aspect, in some possible implementations, the first information includes a first index, and the first index indicates a correspondence between the first PDSCH rate matching resource and the first time offset.

Based on the foregoing technical solution, a rule (for example, a table) about the first PDSCH rate matching and the first time offset is predefined or preconfigured for the terminal device. To be specific, the first network device may directly indicate an index (for example, the first index) or a sequence number of the table in the first information. The terminal device may directly determine, based on the first index and the predefined table, the first PDSCH rate matching and the first time offset that correspond to the first index, so that resource overheads can be reduced.

With reference to the second aspect, in some possible implementations, the first information includes a first field, and the first field indicates the first PDSCH rate matching and the first time offset.

Based on the foregoing technical solution, the first PDSCH rate matching and the first time offset may be directly indicated by the first field in the first information. After obtaining the first information, the terminal device may directly determine the first PDSCH rate matching and the first time offset based on the first field in the first information. The first network device may reuse existing downlink information, and indicate the first PDSCH rate matching and the first time offset by adding the first field. The first PDSCH rate matching and the first time offset do not need to be indicated by adding signaling. This reduces signaling overheads and implements good compatibility with existing signaling.

With reference to the second aspect, in some possible implementations, the second information includes a second index, and the second index indicates a correspondence between the second PDSCH rate matching and the second time offset.

Based on the foregoing technical solution, a rule (for example, a table) about the second PDSCH rate matching and the second time offset is predefined or preconfigured for the terminal device, the first network device, and the second network device. To be specific, the terminal device may directly indicate an index (for example, the second index) or a sequence number of the table in the second information. The first network device and the second network device may directly determine, based on the second index and the predefined table, the second PDSCH rate matching and the second time offset that correspond to the second index, so that the resource overheads can be reduced.

With reference to the second aspect, in some possible implementations, the second information includes a second field, and the second field indicates the second PDSCH rate matching and the second time offset.

Based on the foregoing technical solution, the second PDSCH rate matching and the second time offset may be directly indicated by the second field in the second information. After obtaining the second information, the first network device and the second network device may directly determine the second PDSCH rate matching and the second time offset based on the second field in the second information. The terminal device may reuse existing uplink information, and indicate the second PDSCH rate matching and the second time offset by adding the second field. The second PDSCH rate matching and the second time offset do not need to be indicated by adding signaling. This reduces the signaling overheads and implements the good compatibility with the existing signaling.

With reference to the second aspect, in some possible implementations, the third information includes a third index, and the third index indicates a correspondence between the third PDSCH rate matching and the third time offset.

Based on the foregoing technical solution, a rule (for example, a table) about the third PDSCH rate matching and the third time offset is predefined or preconfigured for the terminal device and the second network device. To be specific, the second network device may directly indicate an index (for example, the third index) or a sequence number of the table in the third information. The terminal device may directly determine, based on the third index and the predefined table, the third PDSCH rate matching and the third time offset that correspond to the third index, so that the resource overheads can be reduced.

With reference to the second aspect, in some possible implementations, the third information includes a third field, and the third field indicates the third PDSCH rate matching and the third time offset.

Based on the foregoing technical solution, the third PDSCH rate matching and the third time offset may be directly indicated by the third field in the third information. After obtaining the third information, the terminal device may directly determine the third PDSCH rate matching and the third time offset based on the third field in the third information. The second network device may reuse the existing downlink information, and indicate the third PDSCH rate matching and the third time offset by adding the third field. The third PDSCH rate matching and the third time offset do not need to be indicated by adding signaling. This reduces the signaling overheads and implements the good compatibility with the existing signaling.

With reference to the second aspect, in some possible implementations, the second time offset includes at least one time offset.

It should be understood that the second time offset includes at least one time offset, and the at least one time offset is determined based on the first time offset, or the at least one time offset is determined based on the first time offset and the third time offset. To be specific, after receiving the at least one time offset, the first network device and the second network device send the PDSCH to the terminal device on a transmission resource determined based on each of the at least one time offset.

With reference to the second aspect, in some possible implementations, when the first information is included in first downlink control information DCI, the first DCI is from the first network device, the first DCI includes a first PDSCH rate matching indication field and a fourth field, the first PDSCH rate matching indication field indicates the first PDSCH rate matching, and the fourth field indicates the first time offset.

It should be understood that, when the first network device sends the first DCI to the terminal device, the first DCI includes the first information, the first DCI may reuse an existing PDSCH rate matching indication field (for example, the first PDSCH rate matching indication field) to indicate the first PDSCH rate matching, and the first DCI adds a field (for example, the fourth field), to indicate the first time offset by using the fourth field.

With reference to the second aspect, in some possible implementations, when the third information is included in second downlink control information DCI, the second DCI is from the second network device, the second DCI includes a second PDSCH rate matching indication field and a fifth field, the second PDSCH rate matching indication field indicates the third PDSCH rate matching, and the fifth field indicates the third time offset.

It should be understood that, when the second network device sends the second DCI to the terminal device, the second DCI includes the third information, the second DCI may reuse an existing PDSCH rate matching indication field (for example, the second PDSCH rate matching indication field) to indicate the third PDSCH rate matching, and the second DCI adds a field (for example, the fifth field), to indicate the third time offset by using the fifth field.

According to a third aspect, a communication apparatus is provided. The apparatus includes a transceiver unit, configured to receive first information, where the first information is from a first network device, and the first information indicates a first physical downlink shared channel PDSCH rate matching and a first time offset.

The transceiver unit is further configured to send second information to a second network device based on the first information, where the second information indicates a second PDSCH rate matching and a second time offset, the second PDSCH rate matching is determined based on the first PDSCH rate matching, the second time offset is determined based on the first time offset, the first time offset is an offset between a time unit in which the first information is located and a time unit in which the first PDSCH rate matching is located, and the second time offset is an offset between a time unit in which the second information is located and a time unit in which the second PDSCH rate matching is located.

It should be understood that the transceiver unit may further perform receiving and sending processing in the first aspect.

In a possible implementation, the communication apparatus further includes a processing unit, and the processing unit is configured to perform processing other than receiving and sending in the first aspect.

According to a fourth aspect, a communication apparatus is provided. The apparatus includes a transceiver unit, configured to receive second information sent by a terminal device, where the second information is determined based on first information, the first information is from a first network device, the first information indicates a first physical downlink shared channel PDSCH rate matching and a first time offset, the second information indicates a second PDSCH rate matching and a second time offset, the second PDSCH rate matching is determined based on the first PDSCH rate matching, and the second time offset is determined based on the first time offset.

The transceiver unit is further configured to send a PDSCH to the terminal device based on the second information.

The first time offset is an offset between a time unit in which the first information is located and a time unit in which the first PDSCH rate matching is located, and the second time offset is an offset between a time unit in which the second information is located and a time unit in which the second PDSCH rate matching is located.

It should be understood that the transceiver unit may further perform receiving and sending processing in the second aspect.

In a possible implementation, the communication apparatus further includes a processing unit, and the processing unit is configured to perform processing other than receiving and sending in the second aspect.

According to a fifth aspect, a communication apparatus is provided, and includes a processor. The processor is coupled to a memory, and may be configured to execute instructions in the memory, to implement the method in any one of the first aspect or the possible implementations of the first aspect, or implement the method in any one of the second aspect or the possible implementations of the second aspect.

Optionally, the communication apparatus further includes the memory.

Optionally, the communication apparatus further includes a communication interface, and the processor is coupled to the communication interface.

In an implementation, the communication apparatus is a centralized user configuration function. When the communication apparatus is a centralized user configuration function, the communication interface may be a transceiver or an input/output interface.

In another implementation, the communication apparatus is a chip configured in a centralized user configuration function. When the communication apparatus is a chip configured in a centralized user configuration function, the communication interface may be an input/output interface.

Optionally, the transceiver may be a transceiver circuit. Optionally, the input/output interface may be an input/output circuit.

According to a sixth aspect, a processor is provided, and includes an input circuit, an output circuit, and a processing circuit. The processing circuit is configured to receive a signal through the input circuit, and transmit a signal through the output circuit, so that the processor performs the method in any possible implementation of the first aspect or the method in any possible implementation of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is separately used as the input circuit and the output circuit at different moments. Specific implementations of the processor and the various circuits are not limited in embodiments of this application.

According to a seventh aspect, a processing apparatus is provided, and includes a processor and a memory. The processor is configured to: read instructions stored in the memory, receive a signal by using a receiver, and transmit a signal by using a transmitter, to perform the method in any possible implementation of the first aspect, or perform the method in any possible implementation of the second aspect.

Optionally, there are one or more processors, and there are one or more memories.

Optionally, the memory may be integrated into the processor, or the memory and the processor are separately disposed.

In a specific implementation process, the memory may be a non-transitory (non-transitory) memory, for example, a read-only memory. The memory and the processor may be integrated on a same chip, or may be separately disposed on different chips. A type of the memory and a manner of disposing the memory and the processor are not limited in embodiments of this application.

It should be understood that a related data exchange process, for example, sending of configuration information, may be a process of outputting configuration information from the processor, and receiving of configuration information, may be a process of receiving input configuration information by the processor. Specifically, data output by the processor may be output to the transmitter, and input data received by the processor may be from the receiver. The transmitter and the receiver may be collectively referred to as a transceiver.

The processing apparatus in the seventh aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eighth aspect, a computer program product is provided. The computer program product includes a computer program (which may also be referred to as code or instructions). When the computer program is run, a computer is enabled to perform the method in any possible implementation of the first aspect, or a computer is enabled to perform the method in any possible implementation of the second aspect.

According to a ninth aspect, a computer-readable storage medium is provided. The computer-readable storage medium stores a computer program (which may also be referred to as code or instructions). When the computer program is run on a computer, the method in any possible implementation of the first aspect is performed, or the method in any possible implementation of the second aspect is performed.

**BRIEF DESCRIPTION OF DRAWINGS**

FIG. 1 is a diagram of a rate matching according to an embodiment of this application;
FIG. 2 is a diagram of a communication system applicable to an example of this application;
FIG. 3 is a schematic flowchart of ideal backhaul link information scheduling;
FIG. 4 is a schematic flowchart of a resource indication method for coordinated transmission according to an embodiment of this application;
FIG. 5 is a diagram of a frame structure in a TDD system according to an embodiment of this application;
FIG. 6 is a diagram of another frame structure in a TDD system according to an embodiment of this application;
FIG. 7 is a diagram of an air interface assisted scheduling procedure according to an embodiment of this application;
FIG. 8 is a diagram of another air interface assisted scheduling procedure according to an embodiment of this application;
FIG. 9 is a block diagram of a communication apparatus according to an embodiment of this application; and
FIG. 10 is a block diagram of another communication apparatus according to an embodiment of this application.

**DESCRIPTION OF EMBODIMENTS**

The following describes technical solutions in this application with reference to the accompanying drawings.
The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, a new radio (new radio, NR) system, a wireless-fidelity (wireless-fidelity, Wi-Fi) system, a communication system related to the 3rd generation partnership project (3rd generation partnership project, 3GPP), and another communication system (for example, a 6G system) that may appear in the future or a multi-communication convergence system.
A terminal device in embodiments of this application is a device having a wireless transceiver function, for example, may include a handheld device having a wireless connection function, or a processing device connected to a wireless modem. The terminal device may communicate with a core network over a radio access network (radio access network, RAN), and exchange a voice and/or data with the RAN. The terminal device may be user equipment (user equipment, UE), a wireless terminal device, a mobile terminal device, a device-to-device (device-to-device, D2D) terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal device may further include a mobile phone (or referred to as a "cellular" phone), a computer having a mobile terminal device, a portable, pocket-sized, handheld, or computer built-in mobile apparatus, or the like, for example, a device like a personal communication service (personal communication service, PCS) phone. In addition, the terminal device may further be a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner. The terminal device may be fixed or mobile.
It should be noted that, in this application, an apparatus configured to implement a function of the terminal device may be a terminal device, or may be an apparatus that can support the terminal device in implementing the function, for example, a chip system, and the apparatus may be installed in the terminal device. In this application, the chip system may include a chip, or may include a chip and another discrete component.
A network device in embodiments of this application is an access device that is in a mobile communication system and that is accessed by the terminal device in a wireless manner, and includes a radio access network device, for example, a base station. The network device may alternatively be a device that communicates with the terminal device through an air interface. The network device may include an evolved NodeB (evolved NodeB) in a long term evolution (long term evolution, LTE) system or long term evolution-advanced (long term evolution-advanced, LTE-A). The evolved NodeB may be referred to as an eNB or an e-NodeB for short. The eNB is an apparatus that is deployed in the radio access network and that meets a fourth generation (fourth generation, 4G) mobile communication technology standard and that provides a wireless communication function for the terminal device. Alternatively, the network device may be a new radio controller (new radio controller, NR controller), a gNodeB (gNodeB, gNB) in a 5G system, a central unit (central unit), a new radio base station, a remote radio module, a micro base station (also referred to as a small cell), a relay (relay), a distributed unit (distributed unit), macro base stations in various forms, a transmission reception point (transmission reception point, TRP), a reception point (reception point, RP), a transmission measurement function (transmission measurement function, TMF), a transmission point (transmission point, TP), or any other radio access device. Embodiments of this application are not limited thereto. The network device may also include a home base station (for example, a home evolved NodeB or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to an eNB in a 4G system, and correspond to a gNB in a 5G system.

A base station in embodiments of this application may include a central unit (central unit, CU) and a distributed unit (distributed unit, DU), and a plurality of DUs may be centrally controlled by one CU. The CU and the DU may be divided based on functions that are of protocol layers of a wireless network and that are of the CU and the DU. For example, functions of a PDCP layer and a protocol layer above the PDCP layer are set on the CU, and functions of protocol layers below the PDCP layer, for example, a radio link control (radio link control, RLC) layer and a media access control (media access control, MAC) layer, are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by the UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

The terminal device in embodiments of this application is connected to the radio access network device in a wireless manner, and the radio access network device is connected to a core network device in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. The terminal device may be stationary, or may be movable.

For ease of understanding of embodiments of this application, several terms in this application are first briefly described.

1. Coherent joint transmission (coherent joint transmission, CJT)

A plurality of network devices transmit data to one terminal device in a coherent transmission manner. All the plurality of network devices participating in coherent transmission obtain related data information (for example, data stream information and a precoding matrix) and channel state information (channel state information, CSI) between the plurality of network devices and the terminal device (for example, a covariance matrix of channels between the plurality of network devices and the terminal device). The plurality of network devices may be equivalent to a plurality of distributed antenna arrays, and jointly precode to-be-transmitted data at a same layer. The "coherent transmission" means that the plurality of network devices may jointly transmit same data, so that signals sent by the plurality of network devices can be superposed in a same phase when arriving at the terminal device, thereby greatly increasing power of a received signal and greatly reducing interference. In other words, a received signal to interference plus noise ratio of the terminal device can be greatly increased through the coherent transmission, thereby significantly improving data transmission performance.

2. Uplink control information (uplink control information, UCI)

The uplink control information is usually used for transmission of an acknowledgment (acknowledgement, ACK) or a negative acknowledgement (negative acknowledgement, NACK) of hybrid automatic repeat request (hybrid automatic repeat request, HARQ) information obtained by demodulating a physical downlink shared channel, a scheduling request (scheduling request, SR), CSI, and the like. The UCI may include one or more of the CSI, the HARQ information, and the SR. The HARQ information may include ACK or NACK fed back for one or more physical downlink shared channels. The ACK may indicate that the physical downlink shared channel is successfully received, and data in the physical downlink shared channel is successfully decoded. The NACK may indicate that the physical downlink shared channel is not successfully received, or data in the physical downlink shared channel is not successfully decoded. The network device may perform data retransmission based on the NACK fed back by the terminal device. The SR is used by the terminal device to request the network device to allocate a physical uplink shared channel resource. The CSI may include one or more of a precoding matrix indicator (precoding matrix indicator, PMI), a rank indication (rank indication, RI), a channel quality indicator (channel quality indicator, CQI), and channel state information reference signal (channel state information reference signal, CSI-RS) resource indication (CSI-RS resource indication, CRI) information. Based on different time domain behavior, the CSI may be further classified into periodic (periodic) CSI, semi-persistent (semi-persistent) CSI, and aperiodic (aperiodic) CSI.

3. Downlink control information (downlink control information, DCI): The downlink control information is control information used to schedule a downlink data channel (for example, a physical downlink shared channel) or an uplink data channel (for example, a physical uplink shared channel), other control information sent over a downlink, or the like.

4. Physical downlink shared channel (physical downlink shared channel, PDSCH): The physical downlink shared channel is mainly used for downlink data transmission, and may also be used for transmission of a paging message and a part of system messages.

5. Duplex mode

Currently, duplex modes in the mobile communication system include full-duplex and half-duplex. A communication device (for example, a terminal device and a network device) may simultaneously perform sending and receiving, which is referred to as full-duplex. A communication device cannot simultaneously perform sending and receiving, which is referred to as half-duplex. The communication device includes a network device and/or a terminal device. For example, both the network device and the terminal device are full-duplex, or both the network device and the terminal device are half-duplex, or the network device is full-duplex, and the terminal device is half-duplex, or the network device is half-duplex, and the terminal device is full-duplex.

Time division duplex (time division duplex, TDD): A frequency range of an uplink (uplink, UL) is the same as a frequency range of a downlink (downlink, DL). For example, the frequency range of the UL is 2010 megahertz (mega Hertz, MHz) to 2025 MHz, and the frequency range of the DL is also 2010 MHz to 2025 MHz. Because the UL and the DL are not a pair of spectrums, the TDD may also be understood as an unpaired spectrum. The terminal device may perform uplink transmission on the UL, and the network device may perform downlink transmission on the DL. In a TDD system, because the frequency range of the UL and the frequency range of the DL are the same, uplink transmission and downlink transmission cannot be performed simultaneously. UL transmission or DL transmission may be performed on one symbol in one slot. Therefore, the TDD is half-duplex. For example, both the terminal device and the network device may be half-duplex.

Frequency division duplex (frequency division duplex, FDD): A frequency range of a UL operating frequency band is different from a frequency range of a DL operating frequency band. It may be understood as that the frequency ranges of the UL and the DL do not overlap at all. For example, the frequency range of the UL is 1920 MHz to 1980 MHz, and the frequency range of the DL is 2110 MHz to 2170 MHz. Because the UL and the DL are a pair of spectrums, the FDD may also be understood as a paired spectrum. The terminal device may perform uplink transmission on the UL, and the network device may perform downlink transmission on the DL. In an FDD system, because the UL and the UL are different, uplink transmission and downlink transmission can be performed simultaneously. Therefore, the FDD is full-duplex. For example, both the terminal device and the network device may be full-duplex.

6. Slot (slot)

In an NR system, for a normal cyclic prefix (cyclic prefix, CP), one slot includes 14 orthogonal frequency division multiplexing (orthogonal frequency division multiplexing, OFDM) symbols (hereinafter referred to as symbols for short). For an extended CP, one slot includes 12 symbols.

One slot may be an uplink slot (uplink slot, U), a downlink slot (downlink slot, D), or a special slot (special slot, S). The uplink slot is configured to be used only for uplink transmission, and all symbols in the uplink slot are uplink symbols. In other words, the uplink symbols are configured to be used only for uplink transmission. The downlink slot is configured to be used only for downlink transmission, and all symbols in the downlink slot are downlink symbols. In other words, the downlink symbols are configured to be used only for downlink transmission. The special slot may be configured to be used for uplink transmission, or may be configured to be used for downlink transmission, but cannot be used for uplink transmission and downlink transmission at the same time. The special slot may be used as an uplink-downlink switching point. Symbols in the special slot may include a part of uplink symbols, a part of downlink symbols, and an interval symbol.

The interval symbol is located between the uplink symbol and the downlink symbol in the special slot, and data cannot be sent on the interval symbol.

7. TDD frame structure

A frame format of a 5G NR system in a TDD mode includes a downlink slot, a special slot, and an uplink slot. There may be one or more uplink slots, there may be one or more downlink slots, and there is one special slot.

A frame length of a radio frame in the 5G NR system is 10 milliseconds (milliseconds, ms), the radio frame includes 10 subframes, a frame length of each subframe is 1 ms, and a quantity of slots included in each subframe is determined based on a system parameter set. A slot used for uplink transmission and a slot used for downlink transmission that are included in each radio frame are determined based on a TDD frame configuration.

For example, the TDD frame configuration is 4:1, and each subframe includes one slot. Types of slots in a radio frame in this structure may be shown in Table 1.

Table 1: Slot types when the TDD frame configuration is 4:1

| Slot | Slot 0 | Slot 1 | Slot 2 | Slot 3 | Slot 4 | Slot 5 | Slot 6 | Slot 7 | Slot 8 | Slot 9 |
| --- | --- | --- | --- | --- | --- | --- | --- | --- | --- | --- |
| Slot type | D | D | D | S | U | D | D | D | S | U |

In Table 1, a slot corresponding to the slot type D is a downlink slot, a slot corresponding to the slot type U is an uplink slot, and a slot corresponding to the slot type S is a special slot. One time periodicity includes five slots, for example, the slot 0 to the slot 4 or the slot 5 to the slot 9 in Table 1. The five slots include three uplink slots, one special slot, and one uplink slot. The special slot is located between the downlink slot and the uplink slot and serves as an uplink-downlink switching point.

For example, the TDD frame configuration is 8:2, and each subframe includes one slot. Types of slots in a radio frame in this structure may be shown in Table 2.

Table 2: Slot types when the TDD frame configuration is 8:2

| Slot | Slot 0 | Slot 1 | Slot 2 | Slot 3 | Slot 4 | Slot 5 | Slot 6 | Slot 7 | Slot 8 | Slot 9 |
| --- | --- | --- | --- | --- | --- | --- | --- | --- | --- | --- |
| Slot type | D | D | D | D | D | D | D | S | U | U |

In Table 2, when the TDD frame configuration is 8:2, one time periodicity includes 10 slots, for example, the slot 0 to the slot 9 in Table 2. The 10 slots include seven downlink slots, one special slot, and two uplink slots. The one special slot is located between the downlink slot and the uplink slot and serves as an uplink-downlink switching point.

7. PDSCH rate matching

The PDSCH rate matching (rate matching) means that an unavailable resource needs to be avoided during PDSCH resource mapping, and the PDSCH resource mapping is performed only on an available resource. A PDSCH resource is a time domain resource and/or a frequency domain resource. The time domain resource may be an OFDM symbol or a symbol (symbol). The frequency domain resource may be a resource block (resource block, RB), a resource block group (resource block group, RBG), or a resource element (resource element, RE).

It should be understood that the PDSCH rate matching may indicate that some time-frequency resource locations are specifically occupied by another signal or channel or are reserved. When performing PDSCH resource mapping, the network device does not map the PDSCH resource to these time-frequency resources, in other words, does not perform PDSCH transmission by using these time-frequency resources.

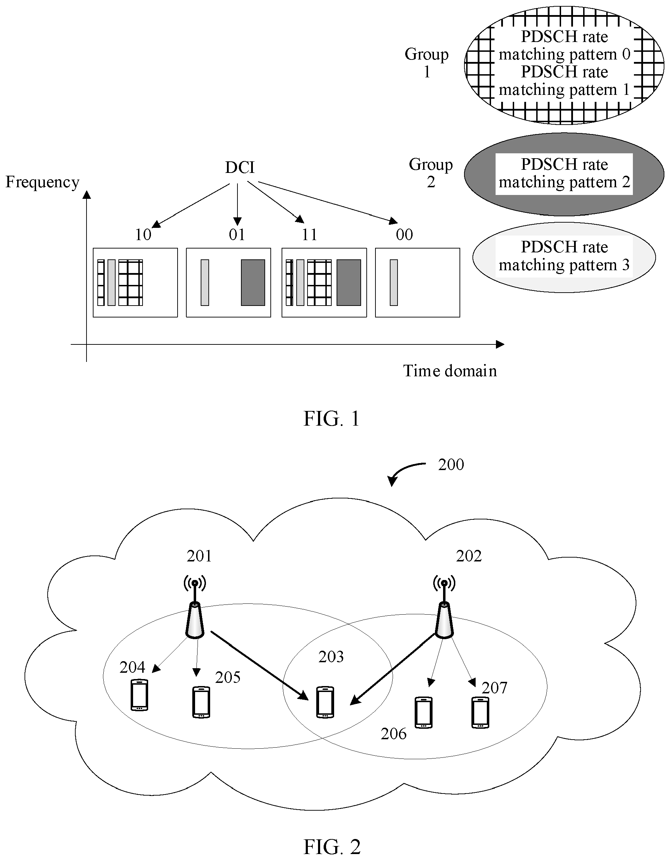

As shown in FIG. 1, each pattern group in PDSCH rate matching pattern (pattern) groups (groups) includes one or more patterns. The PDSCH rate matching pattern group defines a group of time-frequency resource locations, and whether a punctured location included in each pattern group takes effect may be indicated by downlink information (for example DCI) of a network device. A PDSCH rate matching pattern, for example, a PDSCH rate matching pattern 3 in FIG. 1, is not included in the pattern group. The PDSCH rate matching pattern 3 is not in a group 1 or a group 2. In other words, the PDSCH rate matching pattern 3 is not controlled by the downlink information of the network device, and is punctured by default.

Currently, in the 3rd generation partnership project (3rd generation partnership project, 3GPP) technical specification (technical specification, TS) 38.212 v17.5.0 standard, the DCI is used as an example of the downlink information. The DCI may include an indication bit of 0 bits, 1 bit, or 2 bits to indicate the pattern group. A specific quantity of bits is determined based on a higher layer parameter. It is assumed that, when there are two pattern groups, in the 2 bits included in the DCI, a most significant bit (most significant bit, MSB) indicates a pattern group 1, and a least significant bit (least significant bit, LSB) indicates a pattern group 2. For example, there are the group 1 and the group 2 in FIG. 1. The group 1 includes a PDSCH rate matching pattern 0 and a PDSCH rate matching pattern 1, the group 2 includes a PDSCH rate matching pattern 2, and the PDSCH rate matching pattern 3 is not included in the pattern group. The DCI includes an indication bit of 2 bits to indicate the pattern group. In other words, a value of the indication bit in the DCI may be "00, 01, 10, or 11".

As shown in FIG. 1, when the indication bit of 2 bits included in the DCI is "00", a rate matching at time-frequency resource locations corresponding to the PDSCH rate matching pattern 0, the PDSCH rate matching pattern 1, and the PDSCH rate matching pattern 2 included in the group 1 and the group 2 does not take effect, that is, is not punctured. In other words, time-frequency resources corresponding to the PDSCH rate matching pattern 0, the PDSCH rate matching pattern 1, and the PDSCH rate matching pattern 2 may be used for PDSCH transmission. When the indication bit of 2 bits included in the DCI is "01", a rate matching at a time-frequency resource location corresponding to the PDSCH rate matching pattern 2 included in the group 2 takes effect, that is, a time-frequency resource corresponding to the PDSCH rate matching pattern 2 is punctured, and a rate matching at time-frequency resource locations corresponding to the PDSCH rate matching pattern 0 and the PDSCH rate matching pattern 1 included in the group 1 does not take effect, that is, time-frequency resources corresponding to the PDSCH rate matching pattern 0 and the PDSCH rate matching pattern 1 are not punctured. In other words, the time-frequency resources corresponding to the PDSCH rate matching pattern 0 and the PDSCH rate matching pattern 1 may be used for PDSCH transmission, and the time-frequency resource corresponding to the PDSCH rate matching pattern 2 is not used for PDSCH transmission. When the indication bit of 2 bits included in the DCI is "10", a rate matching at a time-frequency resource location corresponding to the PDSCH rate matching pattern 2 included in the group 2 does not take effect, that is, a time-frequency resource corresponding to the PDSCH rate matching pattern 2 is not punctured, a rate matching at time-frequency resource locations corresponding to the PDSCH rate matching pattern 0 and the PDSCH rate matching pattern 1 included in the group 1 takes effect, that is, time-frequency resources corresponding to the PDSCH rate matching pattern 0 and the PDSCH rate matching pattern 1 are punctured. In other words, the time-frequency resources corresponding to the PDSCH rate matching pattern 0 and the PDSCH rate matching pattern 1 are not used for PDSCH transmission, and the time-frequency resource corresponding to the PDSCH rate matching pattern 2 may be used for PDSCH transmission. When the indication bit of 2 bits included in the DCI is "11", a rate matching at time-frequency resource locations corresponding to the PDSCH rate matching pattern 0, the PDSCH rate matching pattern 1, and the PDSCH rate matching pattern 2 included in the group 1 and the group 2 takes effect, that is, is punctured. In other words, time-frequency resources corresponding to the PDSCH rate matching pattern 0, the PDSCH rate matching pattern 1, and the PDSCH rate matching pattern 2 are not used for PDSCH transmission. The PDSCH rate matching pattern 3 is not included in the pattern group, that is, is punctured by default. In other words, a time-frequency resource corresponding to the PDSCH rate matching pattern 3 is not used for PDSCH transmission.

For ease of understanding of embodiments of this application, a communication system shown in FIG. 2 is used as an example to describe in detail a communication system applicable to a method provided in embodiments of this application. FIG. 2 is a diagram of an architecture of a communication system 200 applicable to an embodiment of this application. As shown in FIG. 2, the communication system 200 may include at least one terminal device, for example, terminal devices 203 to 207 shown in FIG. 2. The communication system 200 may further include at least two network devices, for example, a network device 201 and a network device 202 shown in the figure. Information exchange between the network device 201 and the network device 202 is implemented over a non-ideal backhaul (backhaul, BH) link. In the communication system 200, the network device 201 and the network device 202 may communicate with each other over the BH link. The BH link may be a wired BH link (for example, an optical fiber or a copper cable), or may be a wireless BH link (for example, a microwave). The network device 201 and the network device 202 may collaborate with each other to serve the terminal device 203. Therefore, the terminal device 203 may separately communicate with the network device 201 and the network device 202 over radio links. It should be noted that FIG. 2 is merely an example. In an actual communication system, three or more network devices may collaborate with each other to serve the terminal device 203.

Transmission between collaborative network devices may be classified into ideal backhaul (ideal backhaul) and non-ideal backhaul (non-ideal backhaul). For example, communication latency between two network devices in an ideal backhaul link scenario may be at a microsecond level, and may be ignored in comparison with millisecond-level data scheduling in NR. Communication latency between two network devices in non-ideal backhaul may be at a millisecond level, and cannot be ignored in comparison with millisecond-level data scheduling in NR.

In an example, in an ideal backhaul scenario, when a plurality of network devices send a PDSCH to a same terminal device, to implement CJT, network devices participating in performing coordinated transmission to the terminal device separately transmit, over BH, initial scheduling information for pre-scheduling the terminal device by the network devices to a central node. The central node determines, based on a predefined rule and each piece of initial scheduling information, scheduling information for the CJT, and separately transmits the scheduling information to the network devices over the BH, so that the scheduling information for the coordinated transmission performed by the plurality of network devices to the same terminal device is consistent.

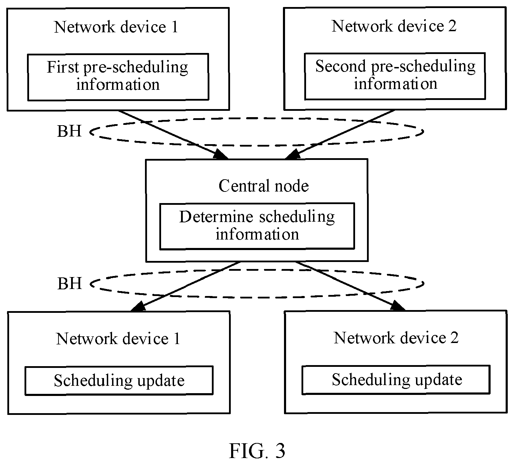

As shown in FIG. 3, a network device 1 and a network device 2 separately perform initial pre-scheduling on a terminal device to determine corresponding pre-scheduling information (for example, first pre-scheduling information and second pre-scheduling information), and complete radio resource selection or allocation. The network device 1 and the network device 2 respectively transmit the first pre-scheduling information and the second pre-scheduling information to a central node over BH. The central node determines scheduling information for CJT based on the first pre-scheduling information and the second pre-scheduling information, and then separately transmits the scheduling information to the network device 1 and the network device 2 over the BH. The network device 1 and the network device 2 separately perform update based on the scheduling information sent by the central node. For example, the network device 1 and the network device 2 respectively update the first pre-scheduling information and the second pre-scheduling information to the scheduling information received from the central node, and send downlink data to the terminal device based on the scheduling information.

It should be understood that, in a method shown in FIG. 3, the central node determines the scheduling information used by the plurality of network devices for the CJT, and interaction is performed over the BH. However, in a non-ideal BH scenario, the BH is characterized by high latency and low bandwidth. For example, a typical value of BH latency is 4 ms. Consequently, latency generated based on a process of determining the scheduling information for the CJT in FIG. 3 is at least 8 ms. Therefore, the network device 1 and the network device 2 need to perform initial pre-scheduling on the terminal device 8 ms in advance. However, when the network device 1 and the network device 2 perform initial pre-scheduling on the terminal device 8 ms in advance, service load statuses of the network device 1 and the network device 2 and channel statuses between the network device 1 and the terminal device and between the network device 2 and the terminal device after 8 ms cannot be accurately estimated. Consequently, data transmission performance of the CJT cannot be ensured.

In the non-ideal backhaul scenario, when a plurality of network devices perform coordinated transmission to a terminal device, backhaul latency of information exchange between the plurality of network devices is high. In other words, high latency exists in a process of unifying scheduling information through interaction between the network devices. Consequently, it is difficult to implement the CJT in a non-ideal backhaul link network communication system.

In view of this, this application provides a resource indication method for coordinated transmission, mainly applied to a non-ideal backhaul wireless communication network, for example, an internet protocol radio access network (internet protocol RAN)-based networking scenario in NR. A communication process occurs between a network device and a terminal device, and a plurality of network devices transmit data to a same terminal device by using CJT.

According to the resource indication method for coordinated transmission provided in this application, a primary network device (also referred to as a primary base station or a primary station) and a coordinated network device (also referred to as a coordinated base station, a coordinated station, a secondary base station, or a secondary station) send initial scheduling information to a terminal device, and the terminal device determines scheduling information for coherent joint transmission based on the initial scheduling information of the network devices, and sends the scheduling information to the network devices. The network devices perform scheduling update based on the scheduling information sent by the terminal device, and transmit downlink data based on the scheduling information sent by the terminal device. This ensures that the network devices transmit data to the same terminal device by using a same time-frequency resource during coherent joint transmission, so that data transmission performance is improved.

For ease of understanding of embodiments of this application, the following several points are described.

First, in embodiments of this application, "indicate" may include "directly indicate and "indirectly indicate", or may include "explicitly indicate" and "implicitly indicate". Information indicated by a piece of information (for example, indication information, an indication field, or configuration information described below) is referred to as to-be-indicated information. In a specific implementation process, the to-be-indicated information may be indicated in a plurality of manners. By way of example but not limitation, the to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

Second, the terms "first", "second", and various numbers in the following embodiments are merely used for differentiation for ease of description, but are not intended to limit the scope of embodiments of this application. For example, the terms are used to distinguish between different indication information.

Third, in the following embodiments, "pre-obtained" or "preset" may include being indicated by a network device via signaling or being predefined (for example, defined in a protocol), and may refer to being defined in a communication protocol and configured in an access network device and a terminal device in communication, or may refer to being determined and configured by a network device for a terminal device. "Configuration" may be explicit configuration performed via signaling or implicit configuration performed by using other information. "Predefinition" may be implemented by pre-storing corresponding code or a corresponding table in a device (for example, including a terminal device and a network device), or may be implemented in another manner of indicating related information. A specific implementation of the "predefinition" is not limited in this application.

Fourth, the resource indication method for coordinated transmission provided in this application is not only applicable to a TDD communication system, but also applicable to an FDD communication system.

Fifth, embodiments of this application relate to coordinated transmission, and the coordinated transmission may include CJT and coherent joint reception (coherent joint reception, CJR). The CJT is downlink data transmission in the coordinated transmission, and the CJR is uplink data transmission in the coordinated transmission. In this application, the CJT downlink data transmission is mainly used as an example to describe the method provided in this application.

The following describes in detail the resource indication method for coordinated transmission provided in this application with reference to the accompanying drawings. Because one or more network devices in a wireless communication system may serve a same terminal device, any network device that is in the wireless communication system and that serves the same terminal device may communicate with the terminal device according to the resource indication method for coordinated transmission provided in this application. The communication between the network device and the terminal device may include: The network device sends downlink data to the terminal device (downlink communication), and the terminal device sends uplink data to the network device (uplink communication). Both the two types of communication are applicable to the resource indication method for coordinated transmission provided in this application.

The following describes in detail the resource indication method for coordinated transmission provided in embodiments of this application by using a scenario in which a plurality of network devices send downlink data to a same terminal device in communication between the plurality of network devices and the same terminal device as an example.

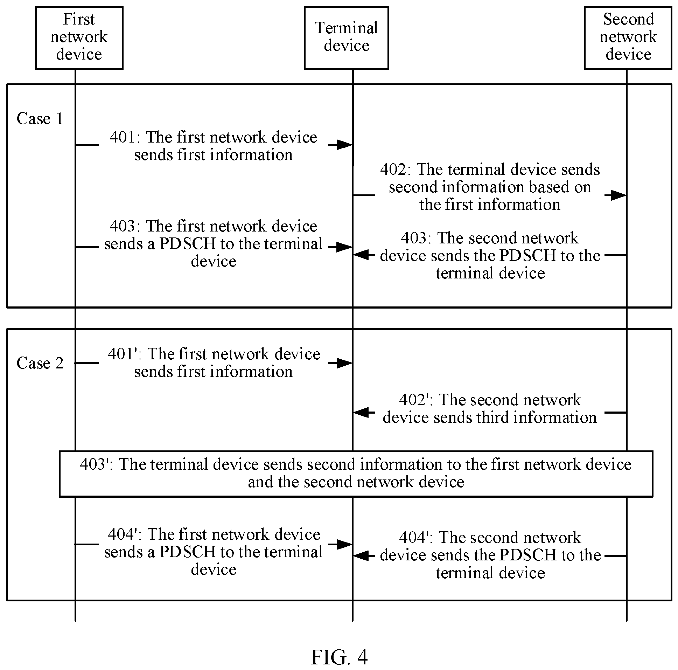

FIG. 4 is a schematic flowchart of a resource indication method for coordinated transmission according to an embodiment of this application.

It should be understood that how to ensure, in a CJT mechanism when only one of a plurality of network devices participating in coordinated transmission performs initial scheduling or two or more of a plurality of network devices participating in coordinated transmission perform initial scheduling, that the plurality of network devices perform PDSCH transmission to a terminal device by using a same time-frequency resource is described. In this application, the method provided in this application is described in detail with reference to the following two cases.

Case 1: Only one of the plurality of network devices participating in coordinated transmission performs initial scheduling.

Case 2: Two or more of the plurality of network devices participating in coordinated transmission perform initial scheduling.

It should be understood that for the foregoing two cases, the following uses an example in which the plurality of network devices include a first network device and a second network device. In other words, both the first network device and the second network device are network devices participating in coordinated transmission to the terminal device. How to ensure, in the CJT mechanism, that the first network device and the second network device perform PDSCH transmission to the terminal device on a same resource is described. The following provides example descriptions with reference to the foregoing two cases and the method shown in FIG. 4.

For Case 1:

Only one of the plurality of network devices participating in coordinated transmission performs initial scheduling. It is assumed that the plurality of network devices include the first network device and the second network device. It is assumed that the first network device performs initial scheduling, and the second network device does not perform initial scheduling. As shown in FIG. 4, the method may include the following steps.

401: The first network device sends first information to the terminal device.

Specifically, the first network device sends the first information to the terminal device. Correspondingly, the terminal device receives the first information from the first network device.

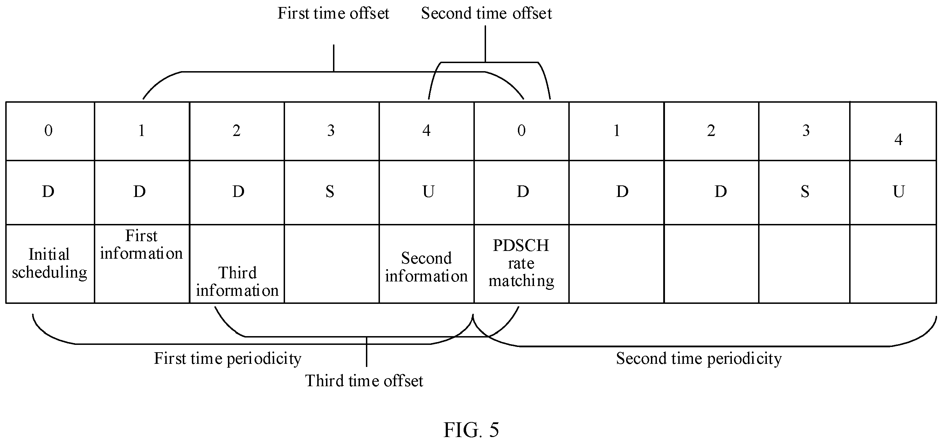

It should be understood that the first network device determines the first information through initial scheduling, and sends the first information to the terminal device. The first information indicates a first PDSCH rate matching and a first time offset, and the first time offset is an offset between a time unit in which the first information is sent and a time unit in which the first PDSCH rate matching is located. As shown in FIG. 5, it is assumed that the first network device performs initial scheduling in a slot 0 in a first time periodicity to determine the first information, and sends the first information to the terminal device in a slot 1 in the first time periodicity. The first network device performs a PDSCH rate matching in a slot 0 in a second time periodicity, and sends a PDSCH to the terminal device. In other words, a time unit in which the PDSCH rate matching is located is the slot 0 in the second time periodicity. The first time offset is an offset between the slot 1 in the first time periodicity in which the first information is located and the slot 0 in the second time periodicity in which the PDSCH rate matching is located. In this application, an example in which the first time offset is $K_3^{(1)}$ is used, and the first time offset is four slots, namely, $K_3^{(1)} = 4$.

In a possible implementation, the first information includes a first index. The first index corresponds to the first PDSCH rate matching and the first time offset, and the first index indicates a correspondence between the first PDSCH rate matching and the first time offset.

It should be understood that, one or more correspondences between the first PDSCH rate matching and the first time offset may be predefined or preconfigured for the terminal device, or may be indicated by the first network device to the terminal device by using indication information. The one or more correspondences between the first PDSCH rate matching and the first time offset may be represented in a form of a table/list. The first information may include the first index corresponding to one correspondence in the table/list. The terminal device can determine the first PDSCH rate matching and the first time offset based on the first index and the one or more correspondences, and the first PDSCH rate matching and the first time offset do not need to be directly indicated. Signaling overheads can be reduced by using the index indicating the correspondence between the first PDSCH rate matching and the first time offset.

In an example, it is assumed that a plurality of correspondences between the first PDSCH rate matching and the first time offset are predefined for the terminal device, and the plurality of correspondences are represented in a form of a table, as shown in Table 3.

Table 3

| First index Row index | First time offset $K_3^{(1)}$ | PDSCH rate matching group 1 | PDSCH rate matching group 2 |
|---|---|---|---|
| 1 | 4 | 0 | 0 |
| 2 | 4 | 0 | 1 |
| 3 | 4 | 1 | 0 |
| 4 | 4 | 1 | 1 |
| 5 | 5 | 0 | 0 |
| 6 | 5 | 0 | 1 |
| 7 | 5 | 1 | 0 |
| 8 | 5 | 1 | 1 |
| 9 | 6 | 0 | 0 |
| 10 | 6 | 0 | 1 |
| 11 | 6 | 1 | 0 |
| 12 | 6 | 1 | 1 |
| ... | | | |

As shown in Table 3, it is assumed that Table 3 is predefined for the terminal device. For example, when a value of the first index in the first information is "4", the terminal device determines the first time offset $K_3^{(1)} = 4$ based on the first index "4" and Table 3. All resources corresponding to PDSCH rate matchings in the PDSCH rate matching group 1 and the PDSCH rate matching group 2 are punctured. In other words, time-frequency resources corresponding to PDSCH rate matching patterns included in the PDSCH rate matching group 1 and the PDSCH rate matching group 2 are not used for PDSCH transmission. For example, when a value of the first index in the first information is "6", the terminal device determines the first time offset $K_3^{(1)} = 5$ based on the first index "6" and Table 3. A resource corresponding to a PDSCH rate matching in the PDSCH rate matching group 1 is not punctured. In other words, a time-frequency resource corresponding to a PDSCH rate matching pattern included in the PDSCH rate matching group 1 may be used for PDSCH transmission. A resource corresponding to a PDSCH rate matching in the PDSCH rate matching group 2 is punctured. In other words, a time-frequency resource corresponding to a PDSCH rate matching pattern included in the PDSCH rate matching group 2 is not used for PDSCH transmission.

It should be understood that, Table 3 shows an example for a case in which a value range of the first time offset is [4, 6], and lists some possible values of the first time offset. In actual application, it is assumed that the value range of the first time offset is $[N_1, N_2]$, and the value of the first time offset includes $N_2 - N_1 + 1$ possibilities. In this case, a quantity of rows in Table 3 may be $(N_2 - N_1 + 1) \times 2^M$, where M is a quantity of PDSCH rate matching groups. In this case, a row index (for example, the first index) of the table may be represented by using $\lfloor \log_2((N_2 - N_1 + 1) \times 2^M) \rfloor$ bits, where $\lceil \cdot \rceil$ represents a ceiling operation.

For example, when $N_2$ = 6, $N_1$ = 2, and M = 4, the first index may be represented by using five bits.

It should be further understood that the value range of the first time offset varies with different duplex modes.

For example, in a TDD duplex mode, the value range of the first time offset may be determined based on a TDD uplink-downlink slot configuration. For example, in the TDD duplex mode, a maximum value of the first time offset may satisfy Formula (1), and a minimum value of the first time offset may satisfy Formula (2).

Maximum value = 2 $\times$ (quantity of special slots + quantity of downlink slots) + quantity of uplink slots - 1 Formula (1) $\qquad$ Formula (1)

$$\text{Minimum value} = \text{quantity of uplink slots} + 1 \qquad\qquad \text{Formula (2)}$$

The quantity of uplink slots, the quantity of special slots, and the quantity of downlink slots in Formula (1) and Formula (2) are all based on one time periodicity. To be specific, the quantity of uplink slots is a quantity of uplink slots in one time periodicity, the quantity of downlink slots is a quantity of downlink slots in one time periodicity, and the quantity of special slots is a quantity of special slots in one time periodicity.

For example, an example in which a TDD frame configuration is 4:1 and each subframe includes one slot is used, and the value range of the first time offset is [2, 8]. An example in which a TDD frame configuration is 8:2 and each subframe includes one slot is used, and the value range of the first time offset is [3, 17].

In another possible implementation, the first information includes a first field, and the first field indicates the first PDSCH rate matching and the first time offset.

It should be understood that, the first network device may add a field (for example, the first field) to existing downlink information, and indicate the first PDSCH rate matching and the first time offset by using the added field, and does not need to indicate the first PDSCH rate matching and the first time offset by adding signaling information. This reduces signaling overheads and implements good compatibility with existing signaling.

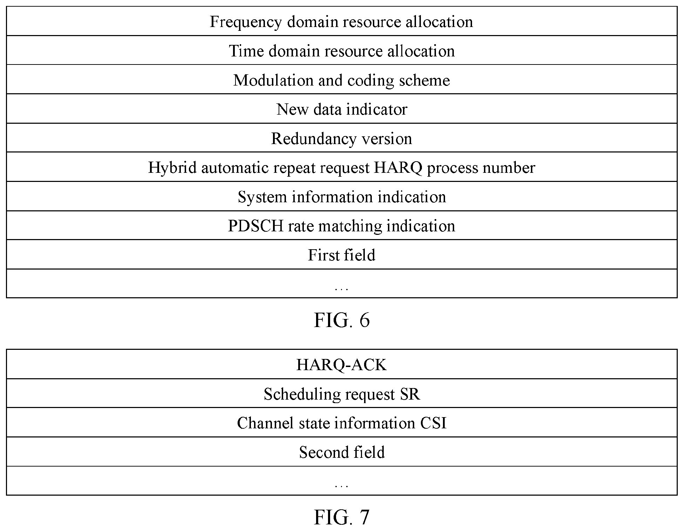

In an example, the first network device adds the first field to the existing downlink information, and indicates the first PDSCH rate matching and the first time offset by using the first field. It is assumed that the downlink information is first DCI. In other words, the first field is added to the first DCI. A field structure of the first DCI is shown in FIG. 6, and the first field may be added to any position in FIG. 6. The first network device adds the first field to the existing first DCI, to indicate the first PDSCH rate matching and the first time offset, so that the signaling overheads of the first network device are reduced and the good compatibility with the existing signaling is implemented.

It should be further understood that the first network device may alternatively indicate the first PDSCH rate matching and the first time offset by using separate signaling information.

In another example, the first network device adds a field to the existing downlink information, to indicate the first PDSCH rate matching and the first time offset. It is assumed that the downlink information is first DCI, and an existing field in the first DCI includes a first PDSCH rate matching indication field. The first network device may indicate the first PDSCH rate matching by using the existing first PDSCH rate matching indication field in the first DCI, and add a fourth field to the existing first DCI, where the fourth field indicates the first time offset. The first PDSCH rate matching and the first time offset are indicated by reusing the first PDSCH rate matching indication field in the existing first DCI and adding the fourth field to the first DCI, so that the signaling overheads of the network device are reduced and the good compatibility with the existing signaling is implemented.

402: The terminal device sends second information to the second network device based on the first information.

Specifically, the terminal device receives the first information from the first network device, determines the second information based on the first information, and sends the second information to the second network device. Correspondingly, the second network device receives the second information from the terminal device.

It should be understood that the second information indicates a second PDSCH rate matching and a second time offset, and the second time offset is an offset between a time unit in which the second information is sent and a time unit in which the second PDSCH rate matching is located. The second PDSCH rate matching is determined based on the first PDSCH rate matching, and the second time offset is determined based on the first time offset.

It should be further understood that the second network device does not perform initial scheduling. To be specific, after receiving the first information from the first network device, the terminal device determines the second information based on the first information, and sends the second information to the second network device.

In an example, the terminal device receives the first information from the first network device, determines the second PDSCH rate matching based on the first PDSCH rate matching indicated by the first information, and determines the second time offset based on the first time offset indicated by the first information. The first PDSCH rate matching is the same as the second PDSCH rate matching, and the first time offset is different from the second time offset. The offset between the time unit in which the first information is located and the time unit in which the first PDSCH rate matching is located is greater than the offset between the time unit in which the second information is located and the time unit in which the second PDSCH rate matching is located. The time unit in which the first PDSCH rate matching is located is the same as the time unit in which the second PDSCH rate matching is located. The time unit in which the first information is located is before the time unit in which the second information is located. In other words, the first time offset is greater than the second time offset.

In a possible implementation, the second information includes a second index. The second index corresponds to the second PDSCH rate matching and the second time offset, and the second index indicates a correspondence between the second PDSCH rate matching and the second time offset.

It should be understood that, one or more correspondences between the second PDSCH rate matching and the second time offset may be predefined or preconfigured for the terminal device and the second network device, or may be indicated by the first network device to the terminal device and the second network device by using indication information. The one or more correspondences between the second PDSCH rate matching and the second time offset may be represented in a form of a table/list. The second information may include the second index corresponding to one correspondence in the table/list. The second network device can determine the second PDSCH rate matching and the second time offset based on the second index and the one or more correspondences, and the second PDSCH rate matching and the second time offset do not need to be indicated. Signaling overheads can be reduced by using the index indicating the correspondence between the second PDSCH rate matching and the second time offset.

In an example, it is assumed that a plurality of correspondences between the second PDSCH rate matching and the second time offset are predefined for the terminal device and the second network device, and the plurality of correspondences are represented in a form of a table, as shown in Table 4.

Table 4

| Second index Row index | Second time offset $K_3^{(2)}$ | PDSCH rate matching group 1 | PDSCH rate matching group 2 |
|---|---|---|---|
| 1 | 3 | 0 | 0 |
| 2 | 3 | 0 | 1 |
| 3 | 3 | 1 | 0 |
| 4 | 3 | 1 | 1 |
| 5 | 4 | 0 | 0 |
| 6 | 4 | 0 | 1 |
| 7 | 4 | 1 | 0 |
| 8 | 4 | 1 | 1 |
| 9 | 4 | 0 | 0 |
| 10 | 5 | 0 | 1 |
| 11 | 5 | 1 | 0 |
| 12 | 5 | 1 | 1 |
| ... | | | |

As shown in Table 4, it is assumed that Table 4 is predefined for the terminal device. For example, when a value of the second index in the second information is "3", the second network device determines, based on the second index "3" and Table 3, that the second time offset is 3. In this application, for example, the second time offset is $K_3^{(2)}$, namely, $K_3^{(2)} = 3$. A resource corresponding to the PDSCH rate matching group 1 is punctured, and a resource corresponding to the PDSCH rate matching group 2 is not punctured. In other words, a time-frequency resource corresponding to a PDSCH rate matching pattern included in the PDSCH rate matching group 1 is not used for PDSCH transmission, and a time-frequency resource corresponding to a PDSCH rate matching pattern included in the PDSCH rate matching group 2 may be used for PDSCH transmission. For example, when a value of the second index in the second information is "5", the second network device determines the second time offset $K_3^{(2)} = 4$ based on the second index "5" and Table 4. Resources corresponding to PDSCH rate matchings in the PDSCH rate matching group 1 and the PDSCH rate matching group 2 are not punctured. In other words, time-frequency resources corresponding to PDSCH rate matching patterns included in the PDSCH rate matching group 1 and the PDSCH rate matching group 2 may be used for PDSCH transmission.

It should be understood that Table 4 describes an example in which a value range of the second time offset is [3, 5], and lists some possible values of the first time offset. In actual application, it is assumed that the value range of the second time offset is [$N_1$, $N_2$], and the value of the second time offset includes $2^{N_2-N_1+1}$ possibilities. In this case, a quantity of rows in Table 4 may be $2^{N_2-N_1+1} \times 2^M$, where $M$ is a quantity of PDSCH rate matchings, and a row index (the second index) of Table 4 may be represented by using $M + N_2 - N_1 + 1$ bits.

It should be further understood that the second time offset $K_3^{(2)}$ may include at least one time offset value. A case in which the second time offset includes one time offset is shown in Table 4, and a case in which the second time offset includes a plurality of (two or more) time offsets is shown in Table 5.

Table 5

| Second index Row index | Second time offset $K_3^{(2)}$ | PDSCH rate matching group 1 | PDSCH rate matching group 2 |
|---|---|---|---|
| 1 | 3 | 0 | 0 |
| 2 | 3 | 0 | 1 |
| 3 | 3 | 1 | 0 |
| 4 | 3 | 1 | 1 |
| 5 | 3, 4 | 0 | 0 |
| 6 | 3, 4 | 0 | 1 |
| 7 | 3, 4 | 1 | 0 |
| 8 | 3, 4 | 1 | 1 |
| 9 | 3, 4 | 0 | 0 |
| 10 | 3, 4, 5 | 0 | 1 |
| 11 | 3, 4, 5 | 1 | 0 |
| 12 | 3, 4, 5 | 1 | 1 |
| ... | | | |

It should be understood that Table 5 is similar to Table 4. For specific descriptions, refer to descriptions of Table 4. Particularly, the second time offset $K_3^{(2)}$ in Table 5 may include a plurality of time offsets. For example, when the value of the second index is "5", $K_3^{(2)} = 3$ and 4, and when the value of the second index is "11", $K_3^{(2)} = 3$, 4, and 5. When the terminal device sends the second index to the second network device, the second network device sends a PDSCH in each of the at least one time offset included in $K_3^{(2)}$.

It should be further understood that, in a TDD mode, before an uplink slot in which the terminal device sends the second information to the second network device arrives, the first network device may perform one or more times of initial scheduling, in other words, may send one or more pieces of first information corresponding to the one or more times of initial scheduling to the terminal device in a downlink slot. The terminal device determines the second information based on the one or more pieces of first information, and sends the second information to the second network device in the uplink slot. In other words, the second time offset includes at least one time offset, and the at least one time offset is determined based on the one or more pieces of first information determined by the first network device through the one or more times of initial scheduling.

In another possible implementation, the second information includes a second field, and the second field indicates the second PDSCH rate matching and the second time offset.

It should be understood that the terminal device may add a field (for example, the second field) to existing uplink information, and indicate the second PDSCH rate matching and the second time offset by using the added field. The terminal device indicates the second PDSCH rate matching and the second time offset by adding the second field to the existing uplink information, and does not need to indicate the second PDSCH rate matching and the second time offset by using separate signaling information. This reduces signaling overheads and implements good compatibility with the existing signaling.

In an example, the terminal device adds the second field to the existing uplink information, and indicates the second PDSCH rate matching and the second time offset by using the second field. It is assumed that the uplink information is UCI. In other words, the second field is added to the UCI. A field structure of the UCI is shown in FIG. 7. The second field is added to an existing UCI structure. A specific position of the second field in the UCI is not limited in this application.

It should be further understood that the terminal device may alternatively indicate the second PDSCH rate matching and the second time offset by using separate signaling information.

It should be further understood that, when the terminal device receives the first information from the first network device in step 401, where the first information indicates the first PDSCH rate matching and the first time offset in a form of the first index, the second information sent by the terminal device to the second network device in step 402 may also indicate the second PDSCH rate matching and the second time offset in a form of the second index. When the terminal device receives the first information from the first network device in step 401, where the first information indicates the first PDSCH rate matching and the first time offset by using the first field, the second information sent by the terminal device to the second network device in step 402 may also indicate the second PDSCH rate matching and the second time offset by using the second field.

403: The first network device sends the PDSCH to the terminal device, and the second network device sends the PDSCH to the terminal device.

Specifically, the first network device sends the PDSCH to the terminal device based on the first PDSCH rate matching and the first time offset that are indicated by the first information determined through initial scheduling of the first network device. The second network device sends the PDSCH to the terminal device based on the second PDSCH rate matching and the second time offset that are indicated by the second information received from the terminal device.

The first network device sends the PDSCH to the terminal device based on the first PDSCH rate matching and the first time offset. The second network device sends the PDSCH to the terminal device based on the second PDSCH rate matching and the second time offset. The first PDSCH rate matching is the same as the second PDSCH rate matching. The first time offset is different from the second time offset. In addition, the time unit in which the first PDSCH rate matching is located is the same as the time unit in which the second PDSCH rate matching is located. In other words, the first network device and the second network device send the PDSCH to the terminal device on a same resource.

In an example, as shown in FIG. 5, assuming that the time unit in which the first information is located is the slot 1 in the first time periodicity, and the time unit in which the first PDSCH rate matching is located is the slot 0 in the second time periodicity, the first time offset is four slots. Assuming that the time unit in which the second information is located is a slot 4 in the first time periodicity, and the time unit in which the second PDSCH rate matching is located is the slot 0 in the second time periodicity, the second time offset is one slot. It may be understood that the first time offset and the second time offset are different, and the time unit in which the first PDSCH rate matching is located and the time unit in which the second PDSCH rate matching is located are the same, and each are the slot 0 in the second time periodicity. For the PDSCH rate matching of the first network device and the PDSCH rate matching of the second network device, the PDSCH is sent to the terminal device in the slot 0 in the second time periodicity, and the first PDSCH rate matching is the same as the second PDSCH rate matching.

According to the method shown in Case 1, in a scenario in which a plurality of network devices perform coordinated transmission, only one of the plurality of network devices performs initial scheduling, so that the terminal device determines the second information based on information (for example, the first information) determined by the network device that performs initial scheduling. The terminal device sends the second information to another network device that does not perform initial scheduling. The second PDSCH rate matching in the second information is determined based on the first PDSCH rate matching in the first information, and the second time offset is determined based on the first time offset in the first information. A plurality of network devices that do not perform initial scheduling send the PDSCH to the terminal device based on the second information, and the network device that performs initial scheduling sends the PDSCH to the terminal device based on the first information. In this way, it can be ensured that the plurality of network devices send the PDSCH to the terminal device on a same resource.

For Case 2:

Two or more of the plurality of network devices participating in coordinated transmission perform initial scheduling. It is assumed that the plurality of network devices include the first network device and the second network device, and both the first network device and the second network device perform initial scheduling. As shown in FIG. 4, the method may include the following steps.

401': The first network device sends first information to the terminal device.

Specifically, the first network device sends the first information to the terminal device. Correspondingly, the terminal device receives the first information from the first network device.

It should be understood that the first network device determines the first information through initial scheduling, and sends the first information to the terminal device. The first information indicates a first PDSCH rate matching and a first time offset, and the first time offset is an offset between a time unit in which the first information is located and a time unit in which the first PDSCH rate matching is located.

In a possible implementation, the first information includes a first index, and the first index indicates a correspondence between the first PDSCH rate matching and the first time offset.

In another possible implementation, the first information includes a first field, and the first field indicates the first PDSCH rate matching and the first time offset.

It should be understood that step 401' is similar to step 401 in Case 1. For details, refer to detailed descriptions in step 401.

402': The second network device sends third information to the terminal device.

Specifically, the second network device sends the third information to the terminal device. Correspondingly, the terminal device receives the third information from the second network device.

It should be understood that the second network device determines the third information through initial scheduling, and sends the third information to the terminal device. The third information indicates a third PDSCH rate matching and a third time offset, and the third time offset is an offset between a time unit in which the third information is located and a time unit in which the third PDSCH rate matching is located. As shown in FIG. 5, it is assumed that the second network device performs initial scheduling in a slot 1 in a first time periodicity to determine the third information, and sends the third information to the terminal device in a slot 2, in other words, a slot in which the third information is transmitted is the slot 2. The second network device performs a PDSCH rate matching in a slot 0 in a second time periodicity, and sends a PDSCH to the terminal device. In other words, a time unit in which the PDSCH rate matching is located is the slot 0 in the second time periodicity. In other words, the third time offset is an offset between the slot 2 in which the third information is located and the slot 0 in which the PDSCH rate matching is located. That is, the third time offset may be $K_3^{(3)} = 3$.

It should be further understood that the second network device and the first network device may perform initial scheduling in a same slot, and send the first information and the third information to the terminal device in a same slot. When the third information and the first information are sent to the terminal device in a same slot, the third time offset is the same as a second time offset.

In a possible implementation, the third information includes a third index, the third index corresponds to the third PDSCH rate matching and the third time offset, and the third index indicates a correspondence between the third PDSCH rate matching and the third time offset.

It should be understood that, one or more correspondences between the third PDSCH rate matching and the third time offset may be predefined or preconfigured for the terminal device, or may be indicated by a third network device to the terminal device by using indication information. The one or more correspondences or correspondence rules between the third PDSCH rate matching and the third time offset may be represented in a form of a table/list. The third information may include the third index corresponding to one or more correspondences in the table/list. The terminal device can determine the third PDSCH rate matching and the third time offset based on the third index and the one or more correspondences, and the third PDSCH rate matching and the third time offset do not need to be directly indicated. Signaling overheads can be reduced by using the index indicating the correspondence between the third PDSCH rate matching and the third time offset.

It is assumed that the correspondence between the third PDSCH rate matching and the third time offset is predefined for the terminal device. When the correspondence is represented in a form of a table, the table is similar to Table 3. For details, refer to detailed descriptions of Table 3. The first PDSCH rate matching and the first time offset in Table 3 only need to be replaced with the third PDSCH rate matching and the third time offset. Details are not described herein again.

In another possible implementation, the third information includes a third field, and the third field indicates the third PDSCH rate matching and the third time offset.

It should be understood that, the second network device may add a field (for example, the third field) to existing downlink information, and indicate the third PDSCH rate matching and the third time offset by using the added field, and does not need to indicate the third PDSCH rate matching and the third time offset by adding signaling information. This reduces signaling overheads and implements good compatibility with existing signaling.

In an example, the second network device adds the third field to the existing downlink information, and indicates the third PDSCH rate matching and the third time offset by using the third field. It is assumed that the downlink information is second DCI, and the third field is added to the second DCI information. A field structure of the second DCI is shown in FIG. 6. Details are similar to the descriptions in step 401 in Case 1. For details, refer to the foregoing detailed descriptions.

It should be further understood that the second network device may alternatively indicate the third PDSCH rate matching and the third time offset by using separate signaling information.

In another example, the second network device adds a field to the existing downlink information, to indicate the third PDSCH rate matching and the third time offset. It is assumed that the downlink information is second DCI, and an existing field in the second DCI includes a second PDSCH rate matching indication field. The second network device may indicate the third PDSCH rate matching by using the existing second PDSCH rate matching indication field in the second DCI, and add a fifth field to the existing second DCI, where the fifth field indicates the third time offset. The third PDSCH rate matching and the third time offset are indicated by reusing the second PDSCH rate matching indication field in the existing second DCI and adding the fifth field to the second DCI, so that the signaling overheads of the network device are reduced and the good compatibility with the existing signaling is implemented.

403': The terminal device sends second information to the first network device and the second network device based on the first information and the third information.

Specifically, after receiving the first information from the first network device and the third information from the second network device, the terminal device determines the second information based on the first information and the third information, and sends the second information to the first network device and the second network device. Correspondingly, the first network device and the second network device receive the second information from the terminal device.

It should be understood that the second information indicates a second PDSCH rate matching and the second time offset, and the second time offset is an offset between a time unit in which the second information is sent and a time unit in which the second PDSCH rate matching is located. The second PDSCH rate matching is determined based on the first PDSCH rate matching and the third PDSCH rate matching, and the second time offset is determined based on the first time offset and the third time offset.

It should be further understood that both the first network device and the second network device have performed initial scheduling, and respectively send the first information and the third information determined through initial scheduling to the terminal device. The terminal device performs resource alignment based on the first information and the third information, to determine the second information.

In an example, it is assumed that a PDSCH rate matching group 1 included in the first PDSCH rate matching in the first information is punctured, and a PDSCH rate matching group 2 is not punctured. In other words, the PDSCH rate matching group 1 included in the first PDSCH rate matching cannot be used for PDSCH transmission, and the PDSCH rate matching group 2 can be used for PDSCH transmission. A PDSCH rate matching group 1 included in the third PDSCH rate matching in the third information is not punctured, and a PDSCH rate matching group 2 is not punctured. In other words, both the PDSCH rate matching group 1 and the PDSCH rate matching group 2 included in the third PDSCH rate matching can be used for PDSCH transmission. The terminal device determines the second PDSCH rate matching based on the first PDSCH rate matching and the third PDSCH rate matching. A PDSCH rate matching group 1 included in the second PDSCH rate matching is punctured, and a PDSCH rate matching group 2 is not punctured. In other words, the PDSCH rate matching group 1 included in the second PDSCH rate matching cannot be used for PDSCH transmission, and the PDSCH rate matching group 2 can be used for PDSCH transmission.

In another example, an example in which the third time offset in this application is $K_3^{(3)}$ is used. It is assumed that the first time offset in the first information is $K_3^{(1)} = 4$, and the third time offset in the third information is $K_3^{(3)} = 5$. The terminal device determines a new time unit $K_3^{(2)} = 3$ based on the first time offset $K_3^{(1)} = 4$. The terminal device generates a new time unit $K_3^{(2)} = 4$ based on the third time offset $K_3^{(3)} = 5$. The terminal device determines the second time offset $K_3^{(2)} = 3, 4$ based on the new time unit corresponding to the first time offset and the new time unit corresponding to the third time offset. The terminal device determines the new time unit $K_3^{(2)}$ based on the first time offset $K_3^{(1)}$, where the new time unit $K_3^{(2)}$ is determined based on the time unit in which the second information is located and the time unit in which the first PDSCH rate matching indicated in the first time offset $K_3^{(1)}$ is located. The terminal device determines the new time unit $K_3^{(2)}$ based on the third time offset $K_3^{(1)}$, where the new time unit $K_3^{(2)}$ is determined based on the time unit in which the second information is located and the time unit in which the third PDSCH rate matching indicated in the third time offset $K_3^{(1)}$ is located.

In a possible implementation, the second information includes a second index. The second index corresponds to the second PDSCH rate matching and the second time offset, and the second index indicates a correspondence between the second PDSCH rate matching and the second time offset.

It should be understood that, a correspondence between the second PDSCH rate matching and the second time offset may be predefined or preconfigured for the terminal device, the first network device, and the second network device. The correspondence between the second PDSCH rate matching and the second time offset may be represented in a form of a table/list. The second information may indicate an index corresponding to the table/list, and the terminal device determines the second PDSCH rate matching and the second time offset based on the second index in the second information.

It is assumed that the correspondence between the second PDSCH rate matching and the second time offset is predefined for the terminal device, the first network device, and the second network device. When the correspondence is represented in a form of a table, the table is similar to Table 4 and Table 5. For details, refer to detailed descriptions of Table 4 and Table 5.

In another possible implementation, the second information includes a second field, and the second field indicates the second PDSCH rate matching and the second time offset. For detailed descriptions in this implementation, refer to descriptions in step 402 in Case 1.

It should be understood that the terminal device may add a field (for example, the second field) to existing uplink information, and indicate the second PDSCH rate matching and the second time offset by using the added field.

It should be further understood that the terminal device may alternatively indicate the second PDSCH rate matching and the second time offset by using separate signaling information.

For the second time offset, it should be further understood that, when the terminal device receives the first information from the first network device in step 401', where the first information indicates the first PDSCH rate matching and the first time offset in a form of the first index, and when the terminal device receives the third information from the second network device in step 402', where the third information indicates the third PDSCH rate matching and the third time offset in a form of the third index, the terminal device sends the second information to the first network device and the second network device in step 403', where the second information may also indicate the second PDSCH rate matching and the second time offset in a form of the second index. Alternatively, when the terminal device receives the first information from the first network device in step 401', where the first information indicates the first PDSCH rate matching and the first time offset by using the first field, and when the terminal device receives the third information from the second network device in step 402', where the third information indicates the third PDSCH rate matching and the third time offset by using the third field, the terminal device sends the second information to the first network device and the second network device in step 403', where the second information may also indicate the second PDSCH rate matching and the second time offset by using the second field.

404': The first network device sends the PDSCH to the terminal device, and the second network device sends the PDSCH to the terminal device.

Specifically, the first network device receives the second information from the terminal device, and sends the PDSCH to the terminal device based on the second information. The second network device receives the second information sent by the terminal device, and sends the PDSCH to the terminal device based on the second information.

The first network device sends the PDSCH to the terminal device based on the second PDSCH rate matching and the second time offset. The second network device sends the PDSCH to the terminal device based on the second PDSCH rate matching and the second time offset. In other words, the first network device and the second network device send the PDSCH to the terminal device on a same resource.

According to the method shown in Case 2, in a scenario in which a plurality of network devices perform coordinated transmission, two or more of the plurality of network devices perform initial scheduling, and the terminal device determines the second information based on information (for example, the first information and the third information) determined by the plurality of network devices through initial scheduling. The terminal device sends the second information to the plurality of network devices. The second PDSCH rate matching in the second information is determined based on the first PDSCH rate matching in the first information and the third PDSCH rate matching in the third information, and the second time offset is determined based on the first time offset in the first information and the third time offset in the third information. The plurality of network devices send the PDSCH to the terminal device by using the second information, so that it can be ensured that the plurality of network devices send the PDSCH to the terminal device by using a same resource.

According to the method shown in FIG. 4, in a scenario in which a plurality of network devices send a PDSCH to a same terminal device through coordinated transmission, Case 1 and Case 2 are obtained through classification based on a quantity of network devices that perform initial scheduling in the plurality of network devices. To be specific, Case 1 indicates how to align resources for transmitting the PDSCH by the plurality of network devices to the terminal device when only one of the plurality of network devices performs initial pre-scheduling, and Case 2 indicates how to align resources for transmitting the PDSCH by the plurality of network devices to the terminal device when a plurality of (two or more) network devices in the plurality of network devices perform initial pre-scheduling. According to Case 1 and Case 2, in a non-ideal backhaul link scenario, the terminal device can align transmission resources of the plurality of network devices, to ensure data transmission performance.

It should be understood that the method shown in FIG. 4 is merely an example. According to the method shown in FIG. 4, the method may further include a plurality of network devices (for example, a network device #1, a network device #2, ..., and a network device #Q) that jointly participate in coordinated transmission to the terminal device, where Q is an integer greater than 2. In Case 1, the network device #1 sends the first information to the terminal device. The terminal device may send the second information to other network devices than the network device #1 in the Q network devices, in other words, send the second information to the network device #2 to the network device #Q. In Case 2, at least two of the Q network devices perform initial scheduling. The at least two network devices may be some or all of the Q network devices, for example, the network device #1 and the network device #2, or the network device #1 to the network device #Q. The terminal device sends the determined second information to the Q network devices.

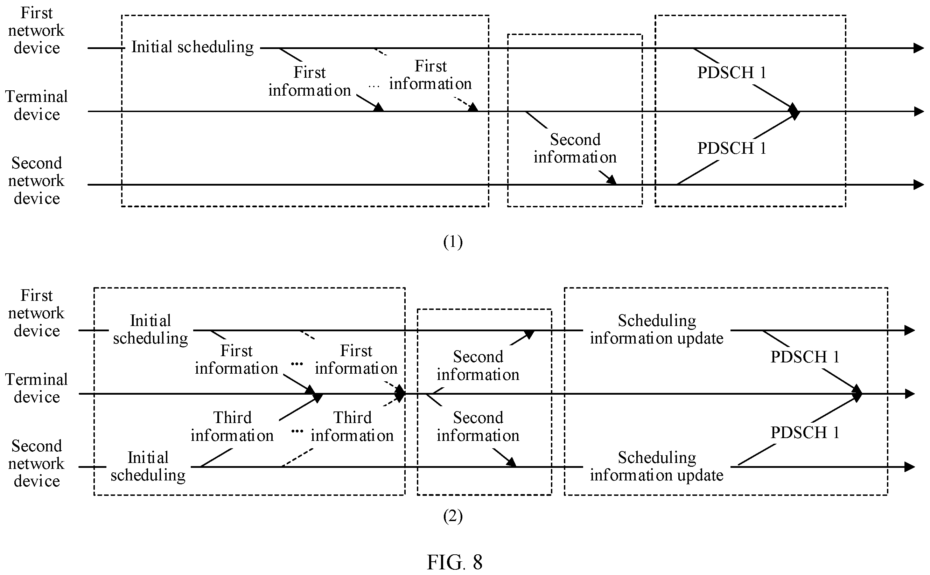

It should be further understood that, according to the method shown in FIG. 4, with reference to FIG. 8, the following describes an example of a schematic flowchart of aligning PDSCH rate matching resource locations of a plurality of network devices.

With reference to Case 1 in FIG. 4, as shown in (1) in FIG. 8, the first network device performs initial scheduling, and sends the first information determined through initial scheduling to the terminal device, and the terminal device sends the second information to the second network device based on the first information. The first network device sends the PDSCH to the terminal device based on the first information, and the second network device sends the PDSCH to the terminal device based on the second information.

It should be understood that, in a TDD mode, before the terminal device sends the second information to the second network device, in other words, before the uplink slot in which the terminal device sends the second information to the second network device, the first network device may perform a plurality of times of initial scheduling, and send a plurality of pieces of first information to the terminal device in the downlink slot. The terminal device determines the second information based on the plurality of pieces of first information, and sends the second information to the second network device.

It should be further understood that, in an FDD mode, after receiving the first information from the first network device, the terminal device sends the second information to the second network device based on the first information in a next time unit (for example, a next slot) of the time unit in which the first information is received, without waiting for arrival of the uplink slot. In a scenario in which a plurality of network devices perform coordinated transmission, interaction latency of information transmission is reduced, and transmission performance is improved.

With reference to Case 2 in FIG. 4, as shown in (2) in FIG. 8, both the first network device and the second network device perform initial scheduling, and send the first information and the third information determined through initial scheduling to the terminal device, and the terminal device sends the second information to the first network device and the second network device based on the first information and the third information. The first network device and the second network device update scheduling information based on the second information, and send the PDSCH to the terminal device based on the second information.

It should be understood that, in a TDD mode, before the terminal device sends the second information to the first network device and the second network device, in other words, before the uplink slot in which the terminal device sends the second information to the first network device and the second network device, the first network device and the second network device may perform a plurality of times of initial scheduling, and send a plurality of pieces of first information and a plurality of pieces of third information to the terminal device in the downlink slot. The terminal device determines the second information based on the plurality of pieces of first information and the plurality of pieces of third information, and sends the second information to the second network device.

It should be further understood that, in an FDD mode, after receiving the first information from the first network device and the third information from the second network device, the terminal device sends the second information to the first network device and the second network device in a next time unit (for example, a next slot) based on the first information and the third information, without waiting for arrival of the uplink slot. In a scenario in which a plurality of network devices perform coordinated transmission, interaction latency of information transmission is reduced, and transmission performance is improved.

It should be noted that names of the first information and the third information in this application are merely examples, and other names may be used, for example, scheduling information, start scheduling information, initial scheduling information, and pre-scheduling information. This is not limited in this application.

In this embodiment of this application, the first network device is a network device that sends the first information to the terminal device, N network devices are network devices that participate in coordinated transmission, the N network devices include the first network device, and N is a positive integer greater than or equal to 2. Optionally, the N network devices participating in coordinated transmission are determined based on channels between the network devices and the terminal device, determined based on locations of the network devices, or determined according to a rule preset in a standard.

It should be understood that determining of the N network devices participating in coordinated transmission is merely an example rather than a limitation. In addition, it should be further understood that for coordinated transmission of CJT, the N network devices participating in coordinated transmission obtain and store data that needs to be sent to the terminal device.

In addition, the first network device may be referred to as a primary network device, and another network device may be referred to as a coordinated network device. For example, the second network device may be referred to as a coordinated network device. For example, in the N network devices of coordinated transmission, a network device with maximum strength of reference signal received power (reference signal received power, RSRP) for receiving by the terminal device may serve as a primary network device, and another device may serve as a coordinated network device; or a network device closest to the terminal device serves as a primary network device, and another device serves as a coordinated network device. It should be understood that the foregoing manner of determining the primary network device is merely an example rather than a limitation.

It should be understood that the first network device may determine the first information of the first network device based on one or more of a service load status of the network device, a real-time service requirement of the terminal device, or a channel condition between the network device and the terminal device. Alternatively, after the N network devices exchange channel statistics information (for example, a channel covariance matrix corresponding to a transmission channel between each network device and the terminal device) between the N network devices and the terminal device over non-ideal BH, the first network device determines the first information based on a service load status of the network device, a real-time service requirement of the terminal device, channel state information between the first network device and the terminal device, and channel state information between another network device and the terminal device. That the second network device performs initial pre-scheduling and determines the third information is similar to that the first network device determines the first information.

It may be understood that, to implement functions in the foregoing embodiments, the network device and the terminal device include corresponding hardware structures and/or software modules for performing the functions. A person skilled in the art should be easily aware that, in this application, units and method steps in examples described with reference to embodiments disclosed in this application can be implemented by hardware or a combination of hardware and computer software. Whether a function is performed by hardware or hardware driven by computer software depends on particular application scenarios and design constraint conditions of technical solutions.

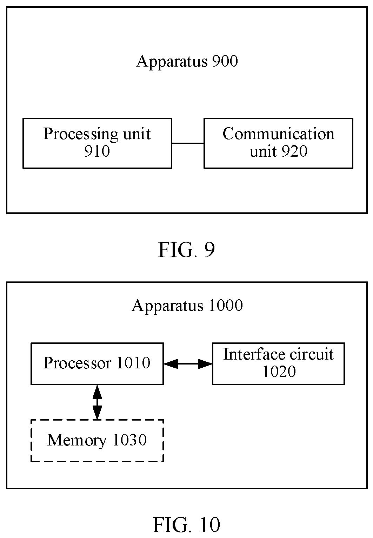

FIG. 9 and FIG. 10 are diagrams of structures of possible communication apparatuses according to an embodiment of this application. The communication apparatuses may be configured to implement a function of the terminal device or the network device in the foregoing method embodiments. Therefore, beneficial effects of the foregoing method embodiments can also be implemented. In this embodiment of this application, the communication apparatus may be the terminal device 203 shown in FIG. 2, may be the network device 201 or the network device 202 shown in FIG. 2, or may be a module (for example, a chip) used in the terminal device or the network device.

As shown in FIG. 9, a communication apparatus 900 includes a processing unit 910 and a transceiver unit 920. The communication apparatus 900 is configured to implement a function of the terminal apparatus or the network apparatus in the method embodiment shown in FIG. 4.

When the communication apparatus 900 is configured to implement the function of the terminal device in the method embodiment shown in FIG. 4:

The transceiver unit 920 is configured to receive first information, where the first information is from a first network device, and the first information indicates a first physical downlink shared channel PDSCH rate matching and a first time offset.

The processing unit 910 is configured to determine second information based on the first information, where the second information indicates a second PDSCH rate matching and a second time offset, the second PDSCH rate matching is determined based on the first PDSCH rate matching, the second time offset is determined based on the first time offset, the first time offset is an offset between a time unit in which the first information is located and a time unit in which the first PDSCH rate matching is located, and the second time offset is an offset between a time unit in which the second information is located and a time unit in which the second PDSCH rate matching is located.

The transceiver unit 920 is further configured to send the second information to a second network device.

When the communication apparatus 900 is configured to implement the function of the network device (for example, the second network device) in the method embodiment shown in FIG. 4:

The transceiver unit 920 is configured to receive second information from a terminal device, where the second information is determined based on first information, the first information is from a first network device, the first information indicates a first physical downlink shared channel PDSCH rate matching and a first time offset, the second information indicates a second PDSCH rate matching and a second time offset, the second PDSCH rate matching is determined based on the first PDSCH rate matching, and the second time offset is determined based on the first time offset.

The processing unit 910 is configured to determine a downlink time-frequency resource based on the second information.

The transceiver unit 920 is further configured to send a PDSCH to the terminal device by using the downlink time-frequency resource.

The first time offset is an offset between a time unit in which the first information is located and a time unit in which the first PDSCH rate matching is located, and the second time offset is an offset between a time unit in which the second information is located and a time unit in which the second PDSCH rate matching is located.

As shown in FIG. 10, a communication apparatus 1010 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1010 may further include a memory 1030 for storing instructions executed by the processor 1010, input data needed by the processor 1010 to run instructions, or data generated after the processor 1010 runs instructions.

When the communication apparatus 1010 is configured to implement the method shown in FIG. 4, the processor 1010 is configured to implement a function of the processing unit 910, and the interface circuit 1020 is configured to implement a function of the transceiver unit 920.

When the foregoing communication apparatus is a chip used in a terminal, the chip in the terminal implements functions of the terminal in the method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the foregoing communication apparatus is a module used in a base station, the module in the base station implements functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

According to the method provided in embodiments of this application, this application further provides a computer program product. The computer program product includes computer program code, and when the computer program code is run on a computer, the computer is enabled to perform the method of the terminal device in the foregoing method embodiments.

According to the method provided in embodiments of this application, this application further provides a computer program product. The computer program product includes computer program code, and when the computer program code is run on a computer, the computer is enabled to perform the method of the first network device in the foregoing method embodiments.

According to the method provided in embodiments of this application, this application further provides a computer program product. The computer program product includes computer program code, and when the computer program code is run on a computer, the computer is enabled to perform the method of the second network device in the foregoing method embodiments.

According to the method provided in embodiments of this application, this application further provides a computer-readable medium. The computer-readable medium stores program code, and when the program code is run on a computer, the computer is enabled to perform the method of the terminal device in the foregoing method embodiments.

According to the method provided in embodiments of this application, this application further provides a computer-readable medium. The computer-readable medium stores program code, and when the program code is run on a computer, the computer is enabled to perform the method of the first network device in the foregoing method embodiments.

According to the method provided in embodiments of this application, this application further provides a computer-readable medium. The computer-readable medium stores program code, and when the program code is run on a computer, the computer is enabled to perform the method of the second network device in the foregoing method embodiments.

An embodiment of this application further provides a processing apparatus, including a processor and an interface. The processor is configured to perform a data scheduling method for coordinated transmission in any one of the foregoing method embodiments.

An embodiment of this application further provides a data scheduling system for coordinated transmission. The system includes the first network device, the second network device, and a terminal device in the foregoing embodiments.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from the foregoing various computer-readable media that store various data structures. For example, the components may communicate by using a local and/or remote process based on a signal having one or more data packets (for example, data from two components interacting with another component in a local system, a distributed system, and/or across a network like the internet interacting with another system by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether these functions are performed by hardware or software depends on particular applications and design constraint conditions of technical solutions. A person skilled in the art may use different methods to implement the described functions for each particular application, but it should not be considered that the implementation goes beyond the scope of this application.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of the foregoing system, apparatus, and unit, refer to a corresponding process in the foregoing method embodiments. Details are not described herein again.

It should be understood that "at least one" in embodiments of this application means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions in this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource indication method for coordinated transmission, applied to a first communication apparatus, and comprising:

    receiving first information, wherein the first information is from a first network device, and the first information indicates a first physical downlink shared channel PDSCH rate matching and a first time offset; and
    sending second information to a second network device based on the first information, wherein the second information indicates a second PDSCH rate matching and a second time offset, the second PDSCH rate matching is determined based on the first PDSCH rate matching, and the second time offset is determined based on the first time offset, wherein
    the first time offset is an offset between a time unit in which the first information is received and a time unit in which the first PDSCH rate matching is located, and the second time offset is an offset between a time unit in which the second information is received and a time unit in which the second PDSCH rate matching is located.

2. The method according to claim 1, wherein the method further comprises:
    receiving at least one piece of third information, wherein the at least one piece of third information is from at least one second network device, one piece of third information in the at least one piece of third information indicates one third PDSCH rate matching in at least one third PDSCH rate matching and one third time offset in at least one third time offset, the one piece of third information, the one third PDSCH rate matching, and the one third time offset are in one-to-one correspondence, and the third time offset is an offset between a time unit in which the third information is received and a time unit in which the third PDSCH rate matching is located.

3. The method according to claim 2, wherein
    the second information is sent to the at least one second network device and the first network device based on the first information and the at least one piece of third information, wherein the second information is determined based on the first information and the at least one piece of third information, the second PDSCH rate matching is determined based on the first PDSCH rate matching and the at least one third PDSCH rate matching, and the second time offset is determined based on the first time offset and the at least one third time offset.

4. The method according to any one of claims 1 to 3, wherein the first information comprises a first index, and the first index indicates a correspondence between the first PDSCH rate matching and the first time offset.

5. The method according to any one of claims 1 to 3, wherein the first information comprises a first field, and the first field indicates the first PDSCH rate matching and the first time offset.

6. The method according to any one of claims 1 to 4, wherein the second information comprises a second index, and the second index indicates a correspondence between the second PDSCH rate matching and the second time offset.

7. The method according to any one of claims 1 to 3 and 5, wherein the second information comprises a second field, and the second field indicates the second PDSCH rate matching and the second time offset.

8. The method according to any one of claims 2 to 4 and 6, wherein the third information comprises a third index, and the third index indicates a correspondence between the third PDSCH rate matching and the third time offset.

9. The method according to any one of claims 2, 3, 5, and 7, wherein the third information comprises a third field, and the third field indicates the third PDSCH rate matching and the third time offset.

10. The method according to any one of claims 1 to 9, wherein the second time offset comprises at least one time offset.

11. The method according to any one of claims 1 to 10, wherein when the first information is comprised in first downlink control information DCI, the first DCI is from the first network device, the first DCI comprises a first PDSCH rate matching indication field and a fourth field, the first PDSCH rate matching indication field indicates the first PDSCH rate matching, and the fourth field indicates the first time offset.

12. The method according to any one of claims 2 to 11, wherein when the third information is comprised in second downlink control information DCI, the second DCI is from the second network device, the second DCI comprises a second PDSCH rate matching indication field and a fifth field, the second PDSCH rate matching indication field indicates the third PDSCH rate matching, and the fifth field indicates the third time offset.

13. A resource indication method for coordinated transmission, applied to a second communication apparatus, and comprising:

receiving second information sent by a terminal device, wherein the second information is determined based on first information, the first information is from a first network device, the first information indicates a first physical downlink shared channel PDSCH rate matching and a first offset, the second information indicates a second PDSCH rate matching and a second offset, the second PDSCH rate matching is determined based on the first PDSCH rate matching, and the second time offset is determined based on the first time offset; and
sending a PDSCH to the terminal device based on the second information, wherein
the first time offset is an offset between a time unit in which the first information is sent and a time unit in which the first PDSCH rate matching is located, and the second time offset is an offset between a time unit in which the second information is sent and a time unit in which the second PDSCH rate matching is located.

14. The method according to claim 13, wherein before the receiving the second information sent by the terminal device, the method further comprises:
sending third information to the terminal device, wherein the third information indicates a third PDSCH rate matching and a third time offset, and the third time offset is an offset between a time unit in which the third information is received and a time unit in which the third PDSCH rate matching is located.

15. The method according to claim 14, wherein

the second information is determined based on the first information and at least one piece of third information, the at least one piece of third information is from at least one second communication apparatus, and the at least one piece of third information indicates at least one third PDSCH rate matching and at least one third time offset; and
that the second PDSCH rate matching is determined based on the first PDSCH rate matching, and the second time offset is determined based on the first time offset comprises:
the second PDSCH rate matching is determined based on the first PDSCH rate matching and the at least one third PDSCH rate matching, and the second time offset is determined based on the first time offset and the at least one third time offset.

16. The method according to any one of claims 13 to 15, wherein the first information comprises a first index, and the first index indicates a correspondence between the first PDSCH rate matching resource and the first time offset.

17. The method according to any one of claims 13 to 15, wherein the first information comprises a first field, and the first field indicates the first PDSCH rate matching and the first time offset.

18. The method according to any one of claims 13 to 16, wherein the second information comprises a second index, and the second index indicates a correspondence between the second PDSCH rate matching and the second time offset.

19. The method according to any one of claims 13 to 15 and 17, wherein the second information comprises a second field, and the second field indicates the second PDSCH rate matching and the second time offset.

20. The method according to any one of claims 14 to 16 and 18, wherein the third information comprises a third index, and the third index indicates a correspondence between the third PDSCH rate matching and the third time offset.

21. The method according to any one of claims 14, 15, 17, and 19, wherein the third information comprises a third field, and the third field indicates the third PDSCH rate matching and the third time offset.

22. The method according to any one of claims 13 to 21, wherein the second time offset comprises at least one time offset.

23. The method according to any one of claims 13 to 22, wherein when the first information is comprised in first downlink control information DCI, the first DCI is from the first network device, the first DCI comprises a first PDSCH rate matching indication field and a fourth field, the first PDSCH rate matching indication field indicates the first PDSCH rate matching, and the fourth field indicates the first time offset.

24. The method according to any one of claims 14 to 23, wherein when the third information is comprised in second downlink control information DCI, the second DCI is from the second communication apparatus, the second DCI comprises a second PDSCH rate matching indication field and a fifth field, the second PDSCH rate matching indication field indicates the third PDSCH rate matching, and the fifth field indicates the third time offset.

25. A communication apparatus, comprising:

the transceiver unit, configured to receive first information, wherein the first information is from a first network device, and the first information indicates a first physical downlink shared channel PDSCH rate matching and a first time offset, wherein
the transceiver unit is further configured to send second information to a second network device based on the first information, wherein the second information indicates a second PDSCH rate matching and a second time offset, the second PDSCH rate matching is determined based on the first PDSCH rate matching, and the second time offset is determined based on the first time offset, wherein
the first time offset is an offset between a time unit in which the first information is received and a time unit in which the first PDSCH rate matching is located, and the second time offset is an offset between a time unit in which the second information is received and a time unit in which the second PDSCH rate matching is located.

26. The apparatus according to claim 25, wherein
the transceiver unit is further configured to receive at least one piece of third information, wherein the at least one piece of third information is from at least one second network device, one piece of third information in the at least one piece of third information indicates one third PDSCH rate matching in at least one third PDSCH rate matching and one third time offset in at least one third time offset, the one piece of third information, the one third PDSCH rate matching, and the one third time offset are in one-to-one correspondence, and the third time offset is an offset between a time unit in which the third information is received and a time unit in which the third PDSCH rate matching is located.

27. The apparatus according to claim 26, wherein the communication apparatus further comprises a processing unit, and the processing unit is configured to control, based on the first information and the at least one piece of third information, the transceiver unit to send the second information to the at least one second network device and the first network device, wherein the second information is determined based on the first information and the at least one piece of third information, the second PDSCH rate matching is determined based on the first PDSCH rate matching and the at least one third PDSCH rate matching, and the second time offset is determined based on the first time offset and the at least one third time offset.

28. The apparatus according to any one of claims 25 to 27, wherein the first information comprises a first index, and the first index indicates a correspondence between the first PDSCH rate matching and the first time offset.

29. The apparatus according to any one of claims 25 to 27, wherein the first information comprises a first field, and the first field indicates the first PDSCH rate matching and the first time offset.

30. The apparatus according to any one of claims 25 to 28, wherein the second information comprises a second index, and the second index indicates a correspondence between the second PDSCH rate matching and the second time offset.

31. The apparatus according to any one of claims 25 to 27 and 29, wherein the second information comprises a second field, and the second field indicates the second PDSCH rate matching and the second time offset.

32. The apparatus according to any one of claims 26 to 28 and 30, wherein the third information comprises a third index, and the third index indicates a correspondence between the third PDSCH rate matching and the third time offset.

33. The apparatus according to any one of claims 26, 27, 29, and 31, wherein the third information comprises a third field, and the third field indicates the third PDSCH rate matching and the third time offset.

34. The apparatus according to any one of claims 25 to 33, wherein the second time offset comprises at least one time offset.

35. The apparatus according to any one of claims 25 to 34, wherein when the first information is comprised in first downlink control information DCI, the first DCI is from the first network device, the first DCI comprises a first PDSCH rate matching indication field and a fourth field, the first PDSCH rate matching indication field indicates the first PDSCH rate matching, and the fourth field indicates the first time offset.

36. The apparatus according to any one of claims 26 to 35, wherein when the third information is comprised in second downlink control information DCI, the second DCI is from the second network device, the second DCI comprises a second PDSCH rate matching indication field and a fifth field, the second PDSCH rate matching indication field indicates the third PDSCH rate matching, and the fifth field indicates the third time offset.

37. A communication apparatus, comprising:

a transceiver unit, configured to receive second information sent by a terminal device, wherein the second information is determined based on first information, the first information is from a first network device, the first information indicates a first physical downlink shared channel PDSCH rate matching and a first offset, the second information indicates a second PDSCH rate matching and a second offset, the second PDSCH rate matching is determined based on the first PDSCH rate matching, and the second time offset is determined based on the first time offset, wherein
the transceiver unit is further configured to send a PDSCH to the terminal device based on the second information, wherein
the first time offset is an offset between a time unit in which the first information is sent and a time unit in which the first PDSCH rate matching is located, and the second time offset is an offset between a time unit in which the second information is sent and a time unit in which the second PDSCH rate matching is located.

38. The apparatus according to claim 37, wherein before receiving the second information sent by the terminal device, the transceiver unit is further configured to send third information to the terminal device, wherein the third information indicates a third PDSCH rate matching and a third time offset, and the third time offset is an offset between a time unit in which the third information is received and a time unit in which the third PDSCH rate matching is located.

39. The apparatus according to claim 38, wherein

the second information is determined based on the first information and at least one piece of third information, the at least one piece of third information is from at least one second communication apparatus, and the at least one piece of third information indicates at least one third PDSCH rate matching and at least one third time offset; and that the second PDSCH rate matching is determined based on the first PDSCH rate matching, and the second time offset is determined based on the first time offset comprises:
the second PDSCH rate matching is determined based on the first PDSCH rate matching and the at least one third PDSCH rate matching, and the second time offset is determined based on the first time offset and the at least one third time offset.

40. The apparatus according to any one of claims 37 to 39, wherein the first information comprises a first index, and the first index indicates a correspondence between the first PDSCH rate matching resource and the first time offset.

41. The apparatus according to any one of claims 37 to 39, wherein the first information comprises a first field, and the first field indicates the first PDSCH rate matching and the first time offset.

42. The apparatus according to any one of claims 37 to 40, wherein the second information comprises a second index, and the second index indicates a correspondence between the second PDSCH rate matching and the second time offset.

43. The apparatus according to any one of claims 37 to 39 and 41, wherein the second information comprises a second field, and the second field indicates the second PDSCH rate matching and the second time offset.

44. The apparatus according to any one of claims 38 to 40 and 42, wherein the third information comprises a third index, and the third index indicates a correspondence between the third PDSCH rate matching and the third time offset.

45. The apparatus according to any one of claims 38, 39, 41, and 43, wherein the third information comprises a third field, and the third field indicates the third PDSCH rate matching and the third time offset.

46. The apparatus according to any one of claims 37 to 45, wherein the second time offset comprises at least one time offset.

47. The apparatus according to any one of claims 37 to 46, wherein when the first information is comprised in first downlink control information DCI, the first DCI is from the first network device, the first DCI comprises a first PDSCH rate matching indication field and a fourth field, the first PDSCH rate matching indication field indicates the first PDSCH rate matching, and the fourth field indicates the first time offset.

48. The apparatus according to any one of claims 38 to 47, wherein when the third information is comprised in second downlink control information DCI, the second DCI is from the second communication apparatus, the second DCI comprises a second PDSCH rate matching indication field and a fifth field, the second PDSCH rate matching indication field indicates the third PDSCH rate matching, and the fifth field indicates the third time offset.

49. A computer-readable storage medium, wherein the computer-readable storage medium stores a computer program or instructions, and
when the computer program or the instructions are executed by a processor, the method according to any one of claims 1 to 12 is performed, or the method according to any one of claims 13 to 24 is performed.

50. A computer program product comprising instructions, wherein when the computer program product runs on a computer, the method according to any one of claims 1 to 12 is performed, or the method according to any one of claims 13 to 24 is performed.

51. A chip system, comprising a processor, configured to invoke a computer program or instructions from a memory and run the computer program or the instructions, to enable a communication apparatus in which the chip system is installed to implement the method according to any one of claims 1 to 12, or implement the method according to any one of claims 13 to 24.

FIG. 1

FIG. 2

FIG. 3

| First network device | | Terminal device | | Second network device |
|---|---|---|---|---|

**Case 1**

401: The first network device sends first information →

402: The terminal device sends second information based on the first information →

403: The first network device sends a PDSCH to the terminal device →

403: The second network device sends the PDSCH to the terminal device

**Case 2**

401': The first network device sends first information →

402': The second network device sends third information

403': The terminal device sends second information to the first network device and the second network device

404': The first network device sends a PDSCH to the terminal device →

404': The second network device sends the PDSCH to the terminal device

FIG. 4

First time offset   Second time offset

| 0 | 1 | 2 | 3 | 4 | 0 | 1 | 2 | 3 | 4 |
|---|---|---|---|---|---|---|---|---|---|
| D | D | D | S | U | D | D | D | S | U |
| Initial scheduling | First information | Third information | | Second information | PDSCH rate matching | | | | |

First time periodicity   Second time periodicity

Third time offset

FIG. 5

| Frequency domain resource allocation |
| :---: |
| Time domain resource allocation |
| Modulation and coding scheme |
| New data indicator |
| Redundancy version |
| Hybrid automatic repeat request HARQ process number |
| System information indication |
| PDSCH rate matching indication |
| First field |
| ... |

FIG. 6

| HARQ-ACK |
| :---: |
| Scheduling request SR |
| Channel state information CSI |
| Second field |
| ... |

FIG. 7

(1)

(2)

FIG. 8

EP 4 757 469 A1

Apparatus 900

Processing unit 910 — Communication unit 920

FIG. 9

Apparatus 1000

Processor 1010 ↔ Interface circuit 1020

Memory 1030

FIG. 10

## INTERNATIONAL SEARCH REPORT

| | International application No. |
|---|---|
| | **PCT/CN2024/112436** |

**A.    CLASSIFICATION OF SUBJECT MATTER**

H04W72/23(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VCN: ENTXT: DWPI; 3GPP: 协作传输, 速率匹配, 物理下行共享信道, 时间偏移, 时频, 偏移, CJT, rate match+, PDSCH, time, offset, pattern, slot, OFDM, RB

**C.    DOCUMENTS CONSIDERED TO BE RELEVANT**

| Category* | Citation of document, with indication, where appropriate, of the relevant passages | Relevant to claim No. |
|---|---|---|
| E | CN 118828900 A (HUAWEI TECHNOLOGIES CO., LTD.) 22 October 2024 (2024-10-22) description, paragraphs 92-381, and figures 7-13 | 1, 4, 5, 10, 13, 16, 17, 22, 25, 28, 29, 34, 37, 40, 41, 46, 49-51 |
| A | CN 111836368 A (HUAWEI TECHNOLOGIES CO., LTD.) 27 October 2020 (2020-10-27) description, paragraphs 231-642, and figures 1-6 | 1-51 |
| A | WO 2023039767 A1 (NEC CORP.) 23 March 2023 (2023-03-23) entire document | 1-51 |
| A | FUTUREWEI. "Unified TCI framework extension for multi-TRP" *3GPP TSG RAN WG1 Meeting #112, R1-2300048*, 03 March 2023 (2023-03-03), entire document | 1-51 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 November 2024** | **13 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/112436**

| Patent document cited in search report | | | Publication date (day/month/year) | Patent family member(s) | | | Publication date (day/month/year) |
|---|---|---|---|---|---|---|---|
| CN | 118828900 | A | 22 October 2024 | None | | | |
| CN | 111836368 | A | 27 October 2020 | WO | 2020211767 | A1 | 22 October 2020 |
| WO | 2023039767 | A1 | 23 March 2023 | CN | 117941438 | A | 26 April 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311127552